# EUROPEAN PATENT APPLICATION

(11) **EP 3 457 384 A2**
(43) Date of publication of application: **20.03.2019**
(21) Application number: 18194323.4
(22) Date of filing: 13.09.2018
(51) Int. Cl.: G08G 1/16, G01S 5/00

(54) **VEHICLE INCLUDING A COMMUNICATION DEVICE FOR VEHICLE-TO-EVERYTHING COMMUNICATION**

(30) Priority: 15.09.2017 KR 20170118905
(71) Applicant: LG Electronics Inc., Yeongdeungpo-Gu Seoul 07336 (KR)
(72) Inventor: PARK, Suho, 06772 Seoul (KR); KI, Hyunho, 06772 Seoul (KR); KIM, Hansung, 06772 Seoul (KR); BAE, Jaeseung, 06772 Seoul (KR); YOON, Jaehwan, 06772 Seoul (KR)
(74) Representative: Vossius & Partner Patentanwälte Rechtsanwälte mbB

(57) **Abstract**

A vehicle includes a communication device for conducting Vehicle to Everything (V2X) communication with an external device outside the vehicle, and a controller for configuring a reception zone based on acquired information, and if it is determined that a transmission position of data received through the communication device is outside the reception zone, filtering the received data.

## Description

The present disclosure relates to a vehicle for configuring a reception zone or transmission zone for data according to am ambient situation or state of the vehicle.

A vehicle refers to a device that carries a passenger in a passenger-intended direction. A car is a major example of the vehicle.

To increase the convenience of vehicle users, a vehicle is equipped with various sensors and electronic devices. Especially, an Advanced Driver Assistance System (ADAS) and an autonomous vehicle are under active study to increase the driving convenience of users.

Vehicle-to-Everything (V2X) is a technology that allows a traveling vehicle to communicate with another device. By V2X, the vehicle receives various types of data from another vehicle, a mobile terminal carried with a pedestrian, a road infrastructure, a server for providing traffic information, and so on, while the vehicle is traveling. The vehicle may determine its surroundings using the received data, and travel autonomously without control of a driver or perform a driver assistance function.

Along with the recent development of the V2X communication technology, the size of transmitted and received data or the number of transmissions and receptions is increased. As a result, V2X communication channels are congested.

The invention is specified in the claims.

Accordingly, an aspect of the present disclosure is to provide a vehicle for configuring a data reception zone according to an ambient situation or state of the vehicle, and filtering data according to the data reception zone.

Another aspect of the present disclosure is to provide a vehicle for configuring a data transmission zone according to an ambient situation or state of the vehicle.

Additional advantages, objects, and features of the present disclosure will be set forth in part in the description which follows and in part will become apparent to those having ordinary skill in the art upon examination of the following or may be learned from practice of the present disclosure. The objectives and other advantages of the present disclosure may be realized and attained by the structure particularly pointed out in the written description and claims hereof as well as the appended drawings.

To achieve the object and other advantages and in accordance with the purpose of the present disclosure, as embodied and broadly described herein, a vehicle includes a communication device for conducting Vehicle to Everything (V2X) communication with an external device outside the vehicle, and a controller for configuring a reception zone based on acquired information, and if it is determined that a transmission position of data received through the communication device is outside the reception zone, filtering the received data.

It is to be understood that both the foregoing general description and the following detailed description of the present disclosure are exemplary and explanatory and are intended to provide further explanation of the present disclosure as claimed.

### BRIEF DESCRIPTION OF THE DRAWINGS

The accompanying drawings, which are included to provide a further understanding of the present disclosure and are incorporated in and constitute a part of this application, illustrate embodiment(s) of the present disclosure and together with the description serve to explain the principle of the present disclosure. In the drawings:
FIG. 1 is a view illustrating the exterior of a vehicle according to an embodiment of the present disclosure;
FIG. 2 is a view illustrating exteriors of a vehicle, seen at various angles from the outside of the vehicle according to an embodiment of the present disclosure;
FIGS. 3 and 4 are views illustrating interiors of a vehicle according to an embodiment of the present disclosure;
FIGS. 5 and 6 are views referred to for describing objects according to an embodiment of the present disclosure;
FIG. 7 is a block diagram of a vehicle according to an embodiment of the present disclosure;
FIGS. 8 and 9 are views illustrating an operation for configuring a reception zone and filtering data according to the configured reception zone in a vehicle according to an embodiment of the present disclosure;
FIGS. 10 to 15 are views illustrating operations for configuring a reception zone according to an ambient situation in a vehicle according to an embodiment of the present disclosure;
FIGS. 16, 17 and 18 are views illustrating operations for configuring a reception zone according to a vehicle state in a vehicle according to an embodiment of the present disclosure;
FIGS. 19 and 20 are views illustrating an operation for configuring a reception zone according to the class of received data in a vehicle, and tables referred to for determining the class of data according to an embodiment of the present disclosure;
FIG. 21 is a view illustrating an operation for configuring a transmission zone according to the class of transmission data in a vehicle according to an embodiment of the present disclosure; and
FIG. 22 is a view illustrating an operation for determining an output position of an alarm according to the transmission position of received data in a vehicle according to an embodiment of the present disclosure.

### DETAILED DESCRIPTION OF THE INVENTION

Embodiments disclosed in the present disclosure will be described in detail with reference to the attached drawings. Like reference numerals denote the same or similar components throughout the drawings and a redundant description of the same components will be avoided. The terms with which the names of components are suffixed, 'module' and 'unit' are assigned or interchangeably used with each other, only in consideration of the readiness of specification writing. The terms do not have any distinguishable meanings or roles. A detailed description of a related known technology will be omitted lest it should obscure the subject matter of embodiments of the present disclosure. Further, the attached drawings are provided to help easy understanding of embodiments disclosed in the present disclosure, not limiting the scope of the present disclosure. Thus, it is to be understood that the present disclosure covers all modifications, equivalents, and/or alternatives falling within the scope of the present disclosure.

While ordinal numbers including 'first', 'second', etc. may be used to describe various components, they are not intended to limit the components. These expressions may be used to distinguish one component from another component.

When it is said that a component is 'coupled with/to' or 'connected to' another component, it should be understood that the one component is connected to the other component directly or through any other component in between. On the other hand, when it is said that a component is 'directly connected to' or 'directly coupled to' another component, it should be understood that there is no other component between the components.

Singular forms include plural referents unless the context clearly dictates otherwise.

In the present disclosure, the term 'have', 'may have', 'include', or 'may include' signifies the presence of a specific feature, number, step, operation, component, or part, or their combinations, not excluding the presence or addition of one or more other features, numbers, steps, operations, components, or parts, or their combinations.

The term 'vehicle' used in the present disclosure may cover a car and a motorbike in concept. The following description is given with the appreciation that a vehicle is a car, by way of example.

In the present disclosure, a vehicle may be any of an internal combustion vehicle equipped with an engine as a power source, a hybrid vehicle equipped with an engine and an electrical motor as power sources, an electric vehicle equipped with an electrical motor as a power source, and the like.

In the following description, the left of a vehicle means the left of a driving direction of the vehicle, and the right of the vehicle means the right of the driving direction of the vehicle.

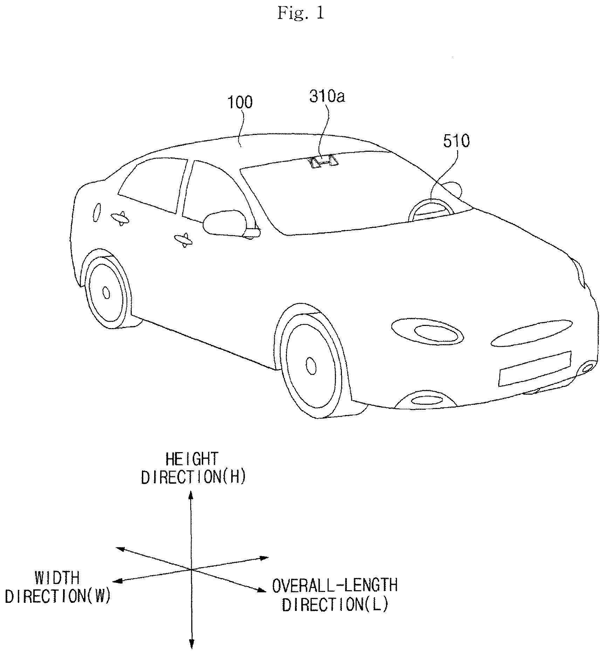

FIGS. 1 to 7 are views referred to for describing a vehicle according to the present disclosure. The vehicle according to the present disclosure will be described below with reference to FIGS. 1 to 7.

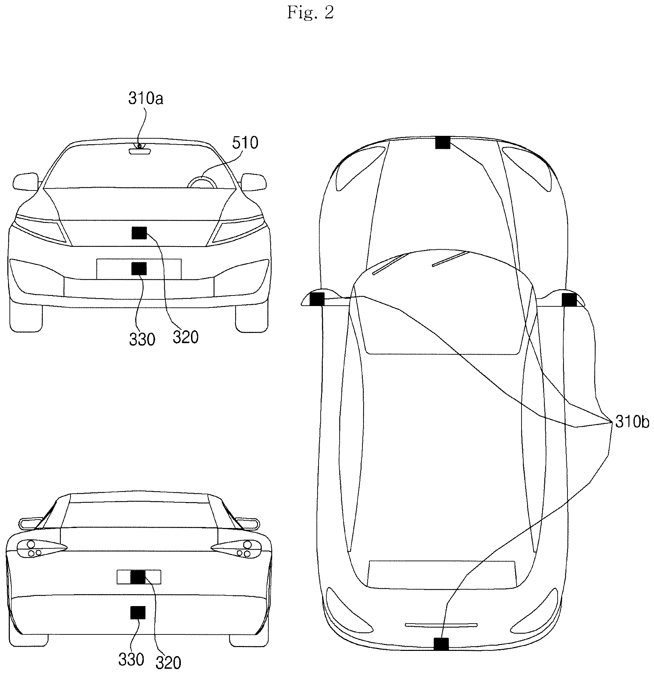

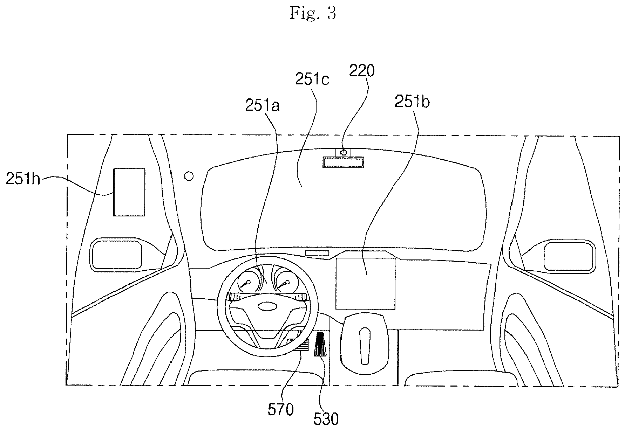

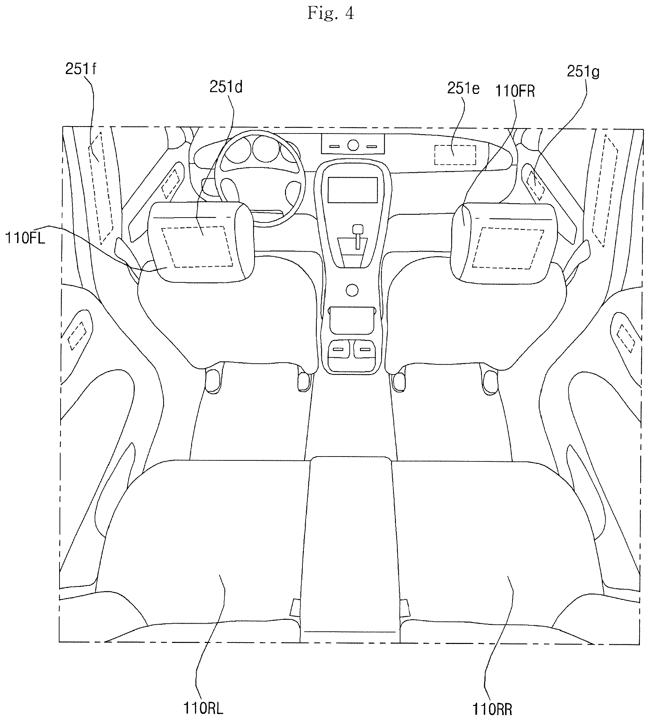

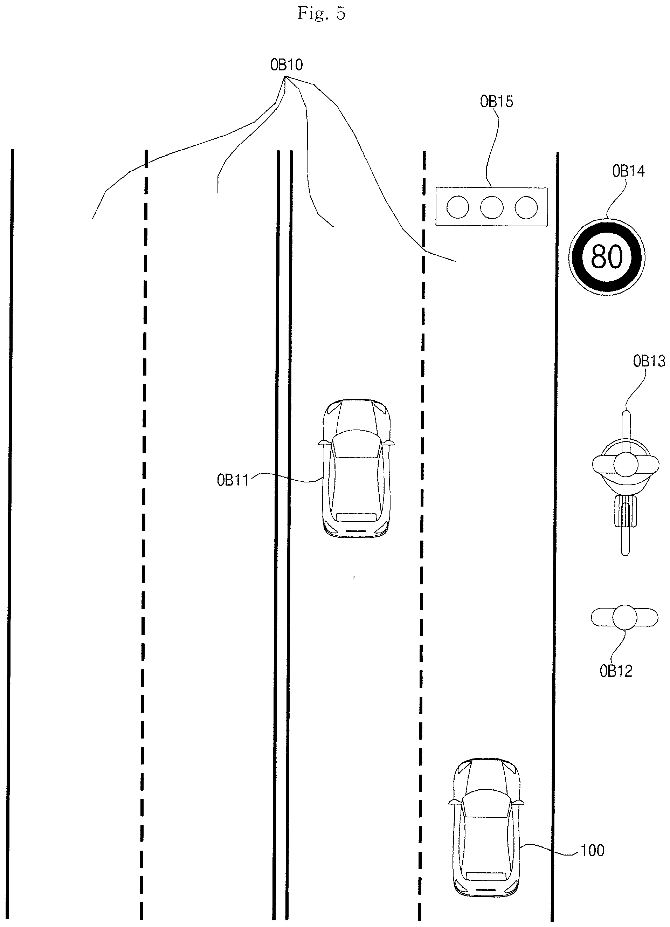

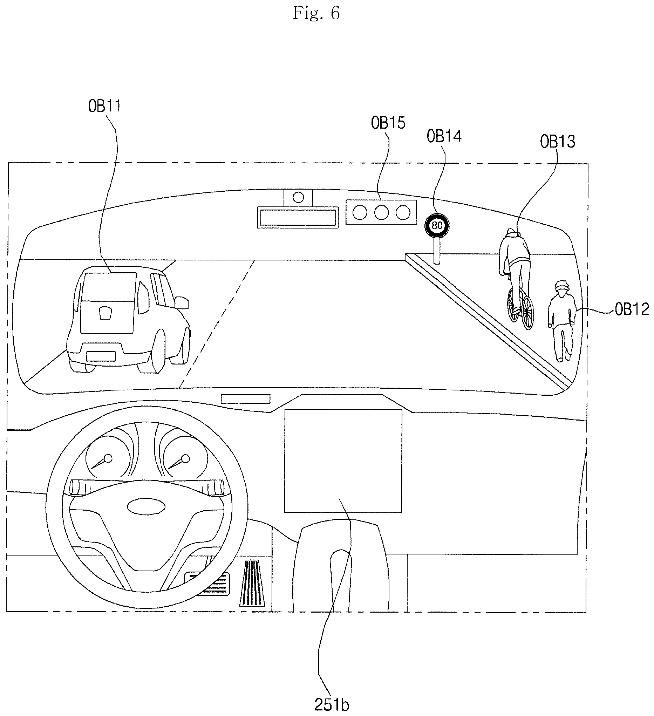

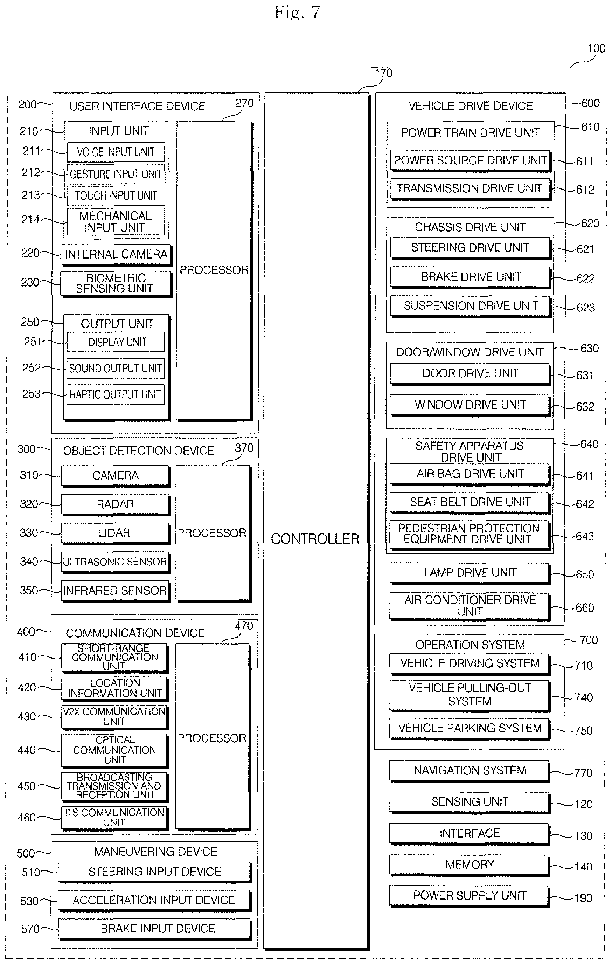

FIG. 1 is a view illustrating the exterior of a vehicle according to an embodiment of the present disclosure, FIG. 2 is a view illustrating exteriors of a vehicle, seen at various angles from the outside of the vehicle according to an embodiment of the present disclosure, FIGS. 3 and 4 are views illustrating interiors of a vehicle according to an embodiment of the present disclosure, FIGS. 5 and 6 are views referred to for describing objects according to an embodiment of the present disclosure, and FIG. 7 is a block diagram of a vehicle according to an embodiment of the present disclosure.

Referring to FIGS. 1 to 7, a vehicle 100 may include wheels rotated by a power source, and a steering input device 510 for controlling a driving direction of the vehicle 100.

The vehicle 100 may include various driver assistance devices. A driver assistance device refers to a device that assists a driver based on information acquired through various sensors. The driver assistance device may be referred to as an Advanced Driver Assistance System (ADAS).

The vehicle 100 may include lots of vehicle illumination devices. The vehicle illumination devices include a head lamp, a rear combination lamp, a turn signal lamp, a room lamp, and so on. The rear combination lamp includes a brake lamp and a tail lamp.

The vehicle 100 may include an internal sensing device and an external sensing device.

An overall length refers to a length from the front side to the rear side of the vehicle 100, an overall width refers to a width of the vehicle 100, and an overall height refers to a length from the bottom of a wheel to the roof of the vehicle 100. In the following description, an overall length direction L may mean a direction based on which the overall length of the vehicle 700 is measured, an overall width direction W may mean a direction based on which the overall width of the vehicle 700 is measured, and an overall height direction H may mean a direction based on which the overall height of the vehicle 700 is measured.

The vehicle 100 may be an autonomous driving vehicle. The vehicle 100 may drive autonomously based on vehicle driving information.

The vehicle driving information is acquired or provided through various units of the vehicle 100. The vehicle driving information may be used for a controller 170 or an operation system 700 to control the vehicle 100.

According to contents related to information, the vehicle driving information may be classified into ambient situation information related to an ambient situation of the vehicle 100, vehicle state information related to states of various devices in the vehicle 100, and passenger information related to a passenger in the vehicle 100. Accordingly, the vehicle driving information may include at least one of ambient situation information, vehicle state information, and passenger information.

According to devices that provide information, the vehicle driving information may be classified into object information acquired by an object detection device 300, communication information that a communication device 400 receives from an external communication device, a user input received by a User Interface (UI) device 200 or a driving manipulation device 500, navigation information provided by a navigation system 770, sensing information provided by a sensing unit 120, and stored information being information stored in a memory 140. Accordingly, the vehicle driving information may include at least one of object information, communication information, a user input, navigation information, sensing information, information acquired and provided by an interface unit 130, and stored information.

The vehicle driving information may be acquired through at least one of the UI device 200, the object detection device 300, the communication device 400, the driving manipulation device 500, the navigation system 770, the sensing unit 120, the interface unit 130, and the memory 140, and provided to the controller 170 or the operation system 700. The controller 170 or the operation system 700 may control autonomous driving of the vehicle 100 based on the vehicle driving information.

The object information is information about an object sensed by the object detection device 300. For example, the object information may be information about the shape, location, size, and/or color of the object. For example, the object information may be information about a lane, an image drawn on a road surface, an obstacle, another vehicle, a pedestrian, a signal lamp, a structure, and/or a traffic sign.

The communication information may be information that a communicable external device transmits. For example, the communication information may include at least one of information transmitted by another vehicle, information transmitted by a mobile terminal, information transmitted by traffic infrastructure, and information existing in a specific network. The traffic infrastructure may include a signal lamp, and the signal lamp may transmit information about a traffic signal.

Further, the vehicle driving information may include at least one of information about states of various devices in the vehicle, and information about a location of the vehicle 100. For example, the vehicle driving information may include information about errors of various devices in the vehicle 100, information about operation states of various devices in the vehicle 100, information about a driving lane of the vehicle 100, and/or map information.

For example, the controller 170 or the operation system 700 may determine the type, location, and movement of an object around the vehicle 100, based on the vehicle driving information. The controller 170 or the operation system 700 may determine, based on the vehicle driving information, a possibility of collision between the vehicle 100 and an object, the type of a road on which the vehicle 100 is driving, a traffic signal around the vehicle 100, movement of the vehicle 100, and so on.

In the vehicle driving information, information about an ambient environment or situation of the vehicle 100 may be referred to as ambient environment information or ambient situation information. For example, object information acquired by the object detection device 300 corresponds to ambient situation information. For example, information about a driving section in which the vehicle 100 is driving, a traffic situation, and information about another vehicle in communication information received from an external communication device by the communication device 400 corresponds to ambient situation information. For example, map information or information about a location of the vehicle 100 in navigation information provided by the navigation information 770 corresponds to ambient situation information.

The passenger information is information about a passenger of the vehicle 100. In the vehicle driving information, information about a passenger of the vehicle 100 may be referred to as passenger information.

The passenger information may be acquired through an internal camera 220 or a biometric sensing unit 230. In this case, the passenger information may include at least one of a captured image of a passenger of the vehicle 100 and biometric information about the passenger.

For example, the passenger information may be an image of the passenger acquired through the internal camera 220. For example, the biometric information may be information about a body temperature, pulse beats, and brain waves of the passenger, acquired through the biometric sensing unit 230.

For example, the controller 170 may determine the position, shape, gaze, face, motion, expression, drowsiness, health state, and emotion state of the passenger, based on the passenger information.

Further, the passenger information may be transmitted from a mobile terminal of the passenger to the communication device 400. For example, the passenger information may be authentication information by which to authenticate the passenger.

The passenger information may be acquired through a passenger sensing unit 240 or the communication device 400 and provided to the controller 170. The passenger information may be included in the vehicle driving information, in concept.

The vehicle state information may be information related to states of a plurality of units in the vehicle 100. In the vehicle driving information, information related to states of units in the vehicle 100 may be referred to as vehicle state information.

For example, the vehicle state information may include information about operation states and errors of the UI device 200, the object detection device 300, the communication device 400, the driving manipulation device 500, a vehicle driving device 600, the operation system 700, the navigation system 770, the sensing unit 120, the interface unit 130, and the memory 140.

The controller 170 may determine operations or errors of a plurality of units in the vehicle 100 based on the vehicle state information. For example, the controller 170 may determine based on the vehicle state information whether a Global Positioning System (GPS) signal is received normally in the vehicle 100, an error has occurred to at least one sensor in the vehicle 100, or whether each device of the vehicle 100 operates normally.

Vehicle state information may be conceptually included in vehicle driving information.

A control mode of the vehicle 100 may be a mode indicating an entity responsible for controlling the vehicle.

For example, the control mode of the vehicle 100 may include an autonomous driving mode in which the controller 170 or the operation system 700 of the vehicle 100 controls the vehicle 100, a manual mode in which a driver aboard the vehicle 100 controls the vehicle 100, and a remote control mode in which a device other than the vehicle 100 controls the vehicle 100.

If the vehicle 100 is placed in the autonomous driving mode, the controller 170 or the operation system 700 may control the vehicle 100 based on vehicle driving information. Accordingly, the vehicle 100 may drive without receiving a user command through the driving manipulation device 500. For example, the vehicle 100 may drive based on information, data, or signals generated from a driving system 710, a park-out system 740, and a park-in system 750.

If the vehicle 100 is placed in the manual mode, the vehicle 100 may be controlled according to a user command requesting at least one of steering, acceleration, and deceleration, received through the driving manipulation device 500. In this case, the driving manipulation device 500 may generate an input signal corresponding to the user command, and provide the generated input signal to the controller 170. The controller 170 may control the vehicle 100 based on the input signal received from the driving manipulation device 500.

If the vehicle 100 is placed in the remote control mode, a device other than the vehicle 100 may control the vehicle 100. If the vehicle 100 drives in the remote control mode, the vehicle 100 may receive a remote control signal from the other device through the communication device 400. The vehicle 100 may be controlled based on the remote control signal.

The vehicle 100 may enter one of the autonomous driving mode, the manual mode, and the remote control mode based on a user input received through the UI device 200.

The control mode of the vehicle 100 may be switched to one of the autonomous driving mode, the manual mode, and the remote control mode based on vehicle driving information. For example, the control mode of the vehicle 100 may be switched from the manual mode to the autonomous driving mode or from the autonomous driving mode to the manual mode based on object information generated from the object detection device 300. The control mode of the vehicle 100 may be switched from the manual mode to the autonomous driving mode or from the autonomous driving mode to the manual mode based on information received through the communication device 400.

As illustrated in FIG. 7, the vehicle 100 may include the UI device 200, the object detection device 300, the communication device 400, the driving manipulation device 500, the vehicle driving device 600, the operation device 700, the navigation system 770, the sensing unit 120, the interface unit 130, the memory 140, the controller 170, and a power supply 190. According to an embodiment, the vehicle 100 may further include a new component in addition to the components described in the present disclosure, or may not include a part of the described components.

The UI device 200 is a device used to enable the vehicle 100 to communicate with a user. The UI device 200 may receive a user input, and provide information generated from the vehicle 100 to the user. The vehicle 100 may implement UIs or User Experience (UX) through the UI device 200.

The UI device 200 may include an input unit 210, the internal camera 220, the biometric sensing unit 230, an output unit 250, and an interface processor 270.

According to an embodiment, the UI device 200 may further include a new component in addition to the above-described components, or may not include a part of the above-described components.

The input unit 210 is intended to receive a user command from a user. Data collected by the input unit 210 may be analyzed by the interface processor 270, and recognized as a control command from the user.

The input unit 210 may be disposed inside the vehicle 100. For example, the input unit 210 may be disposed in an area of a steering wheel, an area of an instrument panel, an area of a seat, an area of each pillar, an area of a door, an area of a center console, an area of a head lining, an area of a sun visor, an area of a windshield, an area of a window, or the like.

The input unit 210 may include a voice input unit 211, a gesture input unit 212, a touch input unit 213, and a mechanical input unit 214.

The voice input unit 211 may convert a voice input of the user to an electrical signal. The converted electrical signal may be provided to the interface processor 270 or the controller 170.

The voice input unit 211 may include one or more microphones.

The gesture input unit 212 may convert a gesture input of the user to an electrical signal. The electrical signal may be provided to the interface processor 270 or the controller 170.

The gesture input unit 212 may include at least one of an InfraRed (IR) sensor and an image sensor, for sensing a gesture input of the user.

According to an embodiment, the gesture input unit 212 may sense a Three-Dimensional (3D) gesture input of the user. For this purpose, the gesture input unit 212 may include a light output unit for emitting a plurality of IR rays or a plurality of image sensors.

The gesture input unit 212 may sense a 3D gesture input of the user by Time of Flight (ToF), structured light, or disparity.

The touch input unit 213 may convert a touch input of the user to an electrical signal. The electrical signal may be provided the interface processor 270 or the controller 170.

The touch input unit 213 may include a touch sensor for sensing a touch input of the user.

According to an embodiment, a touch screen may be configured by integrating the touch input unit 213 with a display unit 251. This touch screen may provide both an input interface and an output interface between the vehicle 100 and the user.

The mechanical input unit 214 may include at least one of a button, a dome switch, a jog wheel, and a jog switch. An electrical signal generated by the mechanical input unit 214 may be provided to the interface processor 270 or the controller 170.

The mechanical input unit 214 may be disposed on the steering wheel, a center fascia, the center console, a cockpit module, a door, or the like.

The passenger sensing unit 240 may sense a passenger in the vehicle 100. The passenger sensing unit 240 may include the internal camera 220 and the biometric sensing unit 230.

The internal camera 220 may acquire a vehicle interior image. The interface processor 270 may sense a state of a user based on the vehicle interior image. For example, the sensed state of the user may be the gaze, face, motion, expression, and position of the user.

The interface processor 270 may determine the gaze, face, motion, expression, and position of the user based on the vehicle interior image acquired by the internal camera 220. The interface processor 270 may determine the user's gesture based on the vehicle interior image. A result of a determination that the interface processor 270 makes based on a vehicle interior image may be referred to as passenger information. In this case, the passenger information may be information representing a gaze direction, motion, expression, gesture, and so on of the user. The interface processor 270 may provide the passenger information to the controller 170.

The biometric sensing unit 230 may acquire biometric information about a user. The biometric sensing unit 230 may include a sensor for acquiring biometric information about a user, and acquire information about a fingerprint, heart beats, and brain waves of a user, using the sensor. The biometric information may be used to authenticate the user of determine a state of the user.

The interface processor 270 may determine the state of the user based on the biometric information about the user acquired by the biometric sensing unit 230. Information about a state of a user that the interface processor 270 determines may be referred to as passenger information. In this case, the passenger information is information indicating whether the user has collapsed, is dozing, is upset, or is in an emergency state. The interface processor 270 may provide the passenger information to the controller 170.

The output unit 250 is intended to generate a visual output, an acoustic output, or a haptic output.

The output unit 250 may include at least one of the display unit 251, an audio output unit 252, and a haptic output unit 253.

The display unit 251 may display graphic objects corresponding to various pieces of information.

The display unit 251 may include at least one of a Liquid Crystal Display (LCD), a Thin-Film LCD (TF LCD), an Organic Light Emitting Diode (OLED) display, a flexible display, a 3D display, and an e-ink display.

A touch screen may be configured by forming a multilayered structure with the display unit 251 and the touch input unit 213 or integrating the display unit 251 with the touch input unit 213.

The display unit 251 may be configured as a Head Up Display (HUD). If the display is configured as a HUD, the display unit 251 may be provided with a projection module, and output information through an image projected onto the windshield or a window.

The display unit 251 may include a transparent display. The transparent display may be attached onto the windshield or a window.

The transparent display may have a specific transparency and display a specific screen. To have a transparency, the transparent display may include at least one of a transparent Thin Film Electroluminescent (TFFL) display, a transparent OLED display, a transmissive transparent LCD, and a transparent LED display. The transparency of the transparent display is controllable.

Meanwhile, the UI device 200 may include a plurality of display units 251a to 251g.

The display unit 251 may be disposed in an area of the steering wheel, areas 251a, 251b and 251e of the instrument panel, an area 251d of a seat, an area 251f of each pillar, an area 251g of a door, an area of the center console, an area of a head lining, or an area of a sun visor, or may be implemented in an area 251c of the windshield, and an area 251h of a window.

The audio output unit 252 converts an electrical signal received from the interface processor 270 or the controller 170 to an audio signal, and outputs the audio signal. For this purpose, the audio output unit 252 may include one or more speakers.

The haptic output unit 253 generates a haptic output. For example, the haptic output is vibration. The haptic output unit 253 may vibrate the steering wheel, a safety belt, a seat 110FL, 110FR, 110RL, or 110RR, so that a user may perceive the output.

The interface processor 270 may provide overall control to each unit of the UI device 200.

According to an embodiment, the UI device 200 may include a plurality of interface processors 270 or no interface processor 270.

If the UI device 200 does not include any interface processor 270, the UI device 200 may operate under the control of a processor of another device in the vehicle 100, or under the control of the controller 170.

Meanwhile, the UI device 200 may be referred to as a vehicle multimedia device.

The UI device 200 may operate under the control of the controller 170.

The object detection device 300 is a device used to detect an object outside the vehicle 100.

An object may be any of various items related to driving of the vehicle 100.

Referring to FIGS. 5 and 6, objects O may include lanes OB10, lines defining the lanes OB10, another vehicle OB11, a pedestrian OB12, a 2-wheel vehicle OB13, traffic signals OB14 and OB15, a curb defining a sidewalk, light, a road, a structure, a speed bump, topography, an animal, and so on.

The lanes OB10 may include a driving lane, a lane next to the driving lane, and a lane in which an opposite vehicle is driving. The lanes OB10 may conceptually include left and right lines that define each of the lanes.

The other vehicle OB11 may be a vehicle driving in the vicinity of the vehicle 100. The other vehicle OB11 may be located within a predetermined distance from the vehicle 100. For example, the other vehicle OB11 may precede or follow the vehicle 100. For example, the other vehicle OB11 may be a vehicle driving on a side of the vehicle 100.

The pedestrian OB12 may be a person located around the vehicle 100. The pedestrian OB12 may be a person located within a predetermined distance from the vehicle 100. For example, the pedestrian OB12 may be a person on a sidewalk or a roadway.

The 2-wheel vehicle OB13 may refer to a transportation means moving on two wheels, located around the vehicle 100. The 2-wheel vehicle OB13 may be a transportation means having two wheels, located within a predetermined distance from the vehicle 100. For example, the 2-wheel vehicle OB13 may be a motorbike or bicycle on a sidewalk or a roadway.

The traffic signals OB14 and OB15 may include a traffic signal lamp OB15, a traffic sign OB14, and a symbol or text drawn or written on a road surface.

The light may be light generated from a lamp of the other vehicle OB11. The light may be generated from a street lamp. The light may be sunlight. The road may include a road surface, a curb, a ramp such as a down-ramp or an up-ramp, and so on. The topography may include a mountain, a hill, and so on.

The structure may be an object fixed on the ground, near to a road. For example, the structure may be any of a street lamp, a street tree, a building, a telephone pole, a signal lamp, a bridge, a curbstone, and a guard rail.

Objects may be classified into mobile objects and fixed objects. A mobile object is movable. For example, the mobile object may conceptually include another vehicle and a pedestrian. A fixed object is not movable. For example, the fixed object may conceptually include a traffic signal, a road, a structure, and a lane.

The object detection device 300 may detect an obstacle outside the vehicle 100. The obstacle may be one of an object, a hole on a road, a starting point of an up-ramp, a starting point of a down-ramp, a testing pit, a speed bump, and a boundary bump. An object may be an item having a volume and a mass.

The object detection device 300 may include the camera 310, a Radio Detection and Ranging (RADAR) 320, a Light Detection and Ranging (LiDAR) 330, an ultrasonic sensor 340, an IR sensor 350, and a sensing processor 370.

According to an embodiment, the object detection device 300 may further include a new component in addition to the above-described components or may not include a part of the above-described components.

To acquire an image of a vehicle exterior image, the camera 310 may be disposed at an appropriate position on the exterior of the vehicle 100. The camera 310 may provide the acquired image to the sensing processor 370. The camera 310 may be a mono camera, a stereo camera 310a, an Around View Monitoring (AVM) camera 310b, or a 360-degree camera.

For example, to acquire an image of what lies ahead of the vehicle 100, the camera 310 may be disposed in the vicinity of a front windshield inside the vehicle 100. Or the camera 310 may be disposed around a front bumper or a radiator grill.

For example, to acquire an image of what lies behind the vehicle 100, the camera 310 may be disposed in the vicinity of a rear glass inside the vehicle 100. Or the camera 310 may be disposed around a rear bumper, a trunk, or a tail gate.

For example, to acquire an image of what lies on a side of the vehicle 100, the camera 310 may be disposed in the vicinity of at least one of side windows inside the vehicle 100. Or the camera 310 may be disposed around a side mirror, a fender, or a door.

The RADAR 320 may include an electromagnetic wave transmitter and an electromagnetic wave receiver. The RADAR 320 may be implemented by pulse RADAR or continuous wave RADAR. The RADAR 320 may be implemented by Frequency Modulated Continuous Wave (FMCW) or Frequency Shift Keying (FSK) as a pulse RADAR scheme according to a signal waveform.

The RADRA 320 may detect an object in TOF or phase shifting by electromagnetic waves, and determine a location, distance, and relative speed of the detected object.

The RADAR 320 may be disposed at an appropriate position on the exterior of the vehicle 100 in order to sense an object ahead of, behind, or beside the vehicle 100.

The LiDAR 330 may include a laser transmitter and a laser receiver. The LiDAR 330 may be implemented in TOF or phase shifting. The LiDAR 330 may be implemented in a driven or non-driven manner.

If the LiDAR 330 is implemented in a driven manner, the LiDAR 330 may be rotated by a motor and detect an object around the vehicle 100.

If the LiDAR 330 is implemented in a non-driven manner, the LiDAR 330 may detect an object within a predetermined range from the vehicle 100 by optical steering. The vehicle 100 may include a plurality of non-driven LiDARs 330.

The LiDAR 330 may detect an object in TOF or phase shifting by laser light, and determine a location, distance, and relative speed of the detected object.

The LiDAR 330 may be disposed at an appropriate position on the exterior of the vehicle 100 in order to sense an object ahead of, behind, or beside the vehicle 100.

The ultrasonic sensor 340 may include an ultrasonic wave transmitter and an ultrasonic wave receiver. The ultrasonic sensor 340 may detect an object by ultrasonic waves, and determine a location, distance, and relative speed of the detected object.

The ultrasonic sensor 340 may be disposed at an appropriate position on the exterior of the vehicle 100 in order to sense an object ahead of, behind, or beside the vehicle 100.

The IR sensor 350 may include an IR transmitter and an IR receiver. The IR sensor 350 may detect an object by IR light, and determine a location, distance, and relative speed of the detected object.

The IR sensor 350 may be disposed at an appropriate position on the exterior of the vehicle 100 in order to sense an object ahead of, behind, or beside the vehicle 100.

The sensing processor 370 may provide overall control to each unit of the object detection device 300.

The sensing processor 370 may detect an object and track the detected object, based on an acquired image. The sensing processor 370 may perform operations including calculation of a distance to the object, calculation of a relative speed to the object, determination of a type, location, size, shape, color, and movement route of the object, and determination of the contents of sensed text, by an image processing algorithm.

The sensing processor 370 may detect an object and track the detected object based on electromagnetic waves which are transmitted, are reflected from an object, and then return. The sensing processor 370 may perform operations including calculation of a distance to the object and a relative speed to the object, based on the electromagnetic waves.

The sensing processor 370 sensing processor 370 may detect an object and track the detected object based on laser light which is transmitted, is reflected from an object, and then returns. The sensing processor 370 may perform operations including calculation of a distance to the object and a relative speed with respect to the object, based on the laser light.

The sensing processor 370 may detect an object and track the detected object based on ultrasonic waves which are transmitted, are reflected from an object, and then return. The sensing processor 370 may perform operations including calculation of a distance to the object and a relative speed with respect to the object based on the ultrasonic waves.

The sensing processor 370 may detect an object and track the detected object based on IR light which is transmitted, is reflected from an object, and then returns. The sensing processor 370 may perform operations including calculation of a distance to the object and a relative speed with respect to the object based on the IR light.

The sensing processor 370 may generate object information based on at least one of an image acquired through the camera 310, reflected electromagnetic waves received through the RADAR 320, reflected laser light received through the LiDAR 330, reflected ultrasonic waves received through the ultrasonic sensor 340, and reflected IR light received through the IR sensor 350.

The object information may be information about a type, location, size, shape, color, movement route, and speed of an object around the vehicle 100, and the contents of sensed text.

For example, the object information may indicate whether there is a lane around the vehicle 100, whether another vehicle around the vehicle 100 is driving while the vehicle 100 is stationary, whether there is a stop area around the vehicle 100, whether there is any possibility of collision between the vehicle 100 and an object, how pedestrians or bicycles are distributed around the vehicle 100, the type of a road on which the vehicle 100 is driving, the state of a signal lamp around the vehicle 100, movement of the vehicle 100, and so on. The object information may be included in vehicle driving information.

The sensing processor 370 may provide the generated object information to the controller 170.

According to an embodiment, the object detection device 300 may include a plurality of sensing processors 370 or no sensing processor 370. For example, each of the camera 310, the RADAR 320, the LiDAR 330, the ultrasonic sensor 340, and the IR sensor 350 may include a processor individually.

The object detection device 300 may operate under the control of a processor of a device in the vehicle 100 or under the control of the controller 170.

The communication device 400 is used to communicate with an external device. The external device may be one of another vehicle, a mobile terminal, a wearable device, and a server.

The communication device 400 may include at least one of a transmission antenna and a reception antenna, for communication, and a Radio Frequency (RF) circuit and device, for implementing various communication protocols.

The communication device 400 may include a short-range communication unit 410, a location information unit 420, a V2X communication unit 430, an optical communication unit 440, a broadcasting transceiver unit 450, an Intelligent Transport System (ITS) communication unit 460, and a communication processor 470.

According to an embodiment, the communication device 400 may further include a new component in addition to the above-described components, or may not include a part of the above-described components.

The short-range communication module 410 may support short-range communication, using at least one of Bluetooth™, Radio Frequency Identification (RFID), Infrared Data Association (IrDA), Ultra Wideband (UWB), ZigBee, Near Field Communication (NFC), Wireless Fidelity (Wi-Fi), Wi-Fi Direct, and Wireless Universal Serial Bus (Wireless USB).

The short-range communication unit 410 may conduct short-range communication between the vehicle 100 and at least one external device by establishing a wireless area network.

The location information unit 420 is a unit configured to acquire information about a location of the vehicle 100. The location information unit 420 may include at least one of a Global Positioning System (GPS) module, a Differential Global Positioning System (DGPS) module, and a Carrier phase Differential Global Positioning System (CDGPS) module.

The location information unit 420 may acquire GPS information through the GPS module. The location information unit 420 may provide the acquired GPS information to the controller 170 or the communication processor 470. The GPS information acquired by the location information unit 420 may be used for autonomous driving of the vehicle 100. For example, the controller 170 may control autonomous driving of the vehicle 100 based on GPS information, and navigation information acquired through the navigation system 770.

The V2X communication unit 430 is a unit used for wireless communication with a server (by Vehicle to Infrastructure (V2I)), another vehicle (by Vehicle to Vehicle (V2V)), or a pedestrian (by Vehicle to Pedestrian (V2P)). The V2X communication unit 430 may include an RF circuit capable of implementing a V2I protocol, a V2V protocol, and a V2P protocol.

The optical communication unit 440 is a unit used to communicate with an external device by light. The optical communication unit 440 may include an optical transmitter for converting an electrical signal to an optical signal and radiating the optical signal to the outside, and an optical receiver for converting a received optical signal to an electrical signal.

According to an embodiment, the optical transmitter may be integrated with a lamp included in the vehicle 100.

The broadcasting transceiver unit 450 is a unit used to receive a broadcast signal from an external broadcasting management server or transmit a broadcast signal to the broadcasting management server, on a broadcast channel. The broadcast channel may include a satellite channel and a terrestrial channel. The broadcast signal may include a TV broadcast signal, a radio broadcast signal, and a data broadcast signal.

The ITS communication unit 460 communicates with a server that provides an ITS. The ITS communication unit 460 may receive information about various traffic states from a server of an ITS. The information about traffic states may include information about a traffic congestion degree, a traffic state by road, a traffic load by section, and so on.

The communication processor 470 may provide overall control to each unit of the communication device 400.

Vehicle driving information may include information received through at least one of the short-range communication unit 410, the location information unit 420, the V2X communication unit 430, the optical communication unit 440, the broadcasting transceiver unit 450, and the ITS communication unit 460.

For example, the vehicle driving information may include information about a location, type, driving lane, speed, and various sensing values of another vehicle, received from the other vehicle. Upon receipt of information about various sensing values of the other vehicle through the communication device 400, the controller 170 may acquire information about a plurality of objects around the vehicle 100 without a sensor.

For example, the vehicle driving information may indicate a type, location, and movement of an object around the vehicle 100, whether there is a lane around the vehicle 100, whether another vehicle around the vehicle 100 is driving while the vehicle 100 is stationary, whether there is any possibility of collision between the vehicle 100 and an object, how pedestrians or bicycles are distributed around the vehicle 100, a type of a road on which the vehicle 100 is driving, a state of a signal lamp around the vehicle 100, movement of the vehicle 100, and so on.

According to an embodiment, the communication device 400 may include a plurality of communication processors 470 or no communication processor 470.

If the communication device 400 does not include any communication processor 470, the communication device 400 may operate under the control of a processor of another device in the vehicle 100 or under the control of the controller 170.

Meanwhile, the communication device 400 may be configured as a vehicle multimedia device, together with the UI device 200. In this case, the vehicle multimedia device may be referred to as a telematics device or an Audio Video Navigation (AVN) device.

The communication device 400 may operate under the control of the controller 170.

The driving manipulation device 500 is a device used to receive a user command for driving the vehicle 100.

In the manual mode, the vehicle 100 may drive based on a signal provided by the driving manipulation device 500.

The driving manipulation device 500 may include the steering input device 510, an acceleration input device 530, and a brake input device 570.

The steering input device 510 may receive a user command for steering the vehicle 100 from a user. The user command for steering may be a command corresponding to a specific steering angle. For example, the user command for steering may correspond to 45 degrees to the right.

The steering input device 510 is preferably configured as a wheel for enabling a steering input by rotation. In this case, the steering input device 510 may be referred to as a steering wheel or a handle.

According to an embodiment, the steering input device 510 may be configured as a touch screen, a touchpad, or a button.

The acceleration input device 530 may receive a user command input for acceleration of the vehicle 100 from the user.

The brake input device 570 may receive a user command for deceleration of the vehicle 100 from the user. The acceleration input device 530 and the brake input device 570 may be formed into pedals.

According to an embodiment, the acceleration input device 530 or the brake input device 570 may be configured as a touch screen, a touchpad, or a button.

The driving manipulation device 500 may operate under the control of the controller 170.

The vehicle driving device 600 is a device used to electrically control driving of various devices of the vehicle 100.

The vehicle driving device 600 may include at least one of a power train driving unit 610, a chassis driving unit 620, a door/window driving unit 630, a safety device driving unit 640, a lamp driving unit 650, and an air conditioner driving unit 660.

According to an embodiment, the vehicle driving device 600 may further include a new component in addition to the above-described components or may not include a part of the above-described components.

Meanwhile, the vehicle driving device 600 may include a processor. Each individual unit of the vehicle driving device 600 may include a processor.

The power train driving unit 610 may control operation of a power train device.

The power train driving unit 610 may include a power source driver 611 and a transmission driver 612.

The power source driver 611 may control a power source of the vehicle 100.

For example, if the power source is a fossil fuel-based engine, the power source driver 610 may perform electronic control on the engine. Therefore, the power source driver 610 may control an output torque of the engine, and the like. The power source driver 611 may adjust the engine output torque under the control of the controller 170.

For example, if the power source is an electrical energy-based motor, the power source driver 610 may control the motor. The power source driver 610 may adjust a rotation speed, torque, and so on of the motor under the control of the controller 170.

The transmission driver 612 may control a transmission.

The transmission driver 612 may adjust a state of the transmission. The transmission driver 612 may adjust the state of the transmission to drive D, reverse R, neutral N, or park P.

If the power source is an engine, the transmission driver 612 may adjust an engagement state of a gear in the drive state D.

The chassis driving unit 620 may control operation of a chassis device.

The chassis driving unit 620 may include a steering driver 621, a brake driver 622, and a suspension driver 623.

The steering driver 621 may perform electronic control on a steering device in the vehicle 100. The steering driver 621 may change a driving direction of the vehicle 100.

The brake driver 622 may perform electronic control on a brake device in the vehicle 100. For example, the brake driver 622 may decrease the speed of the vehicle 100 by controlling an operation of a brake disposed at a tire.

Meanwhile, the brake driver 622 may control a plurality of brakes individually. The brake driver 622 may differentiate braking power applied to a plurality of wheels.

The suspension driver 623 may perform electronic control on a suspension device in the vehicle 100. For example, if the surface of a road is rugged, the suspension driver 623 may control the suspension device to reduce jerk of the vehicle 100.

Meanwhile, the suspension driver 623 may control a plurality of suspensions individually.

The door/window driving unit 630 may perform electronic control on a door device or a window device in the vehicle 100.

The door/window driving unit 630 may include a door driver 631 and a window driver 632.

The door driver 631 may perform electronic control on a door device in the vehicle 100. For example, the door driver 631 may control opening and closing of a plurality of doors in the vehicle 100. The door driver 631 may control opening or closing of the trunk or the tail gate. The door driver 631 may control opening or closing of the sunroof.

The window driver 632 may perform electronic control on a window device in the vehicle 100. The window driver 632 may control opening or closing of a plurality of windows in the vehicle 100.

The safety device driving unit 640 may perform electronic control on various safety devices in the vehicle 100.

The safety device driving unit 640 may include an airbag driver 641, a seatbelt driver 642, and a pedestrian protection device driver 643.

The airbag driver 641 may perform electronic control on an airbag device in the vehicle 100. For example, the airbag driver 641 may control inflation of an airbag, upon sensing an emergency situation.

The seatbelt driver 642 may perform electronic control on a seatbelt device in the vehicle 100. For example, the seatbelt driver 642 may control securing of passengers on the seats 110FL, 110FR, 110RL, and 110RR by means of seatbelts, upon sensing a danger.

The pedestrian protection device driver 643 may perform electronic control on a hood lift and a pedestrian airbag in the vehicle 100. For example, the pedestrian protection device driver 643 may control hood lift-up and inflation of the pedestrian airbag, upon sensing collision with a pedestrian.

The lamp driving unit 650 may perform electronic control on various lamp devices in the vehicle 100.

The air conditioner driver 660 may perform electronic control on an air conditioner in the vehicle 100. For example, if a vehicle internal temperature is high, the air conditioner driver 660 may control the air conditioner to operate and supply cool air into the vehicle 100.

The vehicle driving device 600 may include a processor. Each individual unit of the vehicle driving device 600 may include a processor.

The vehicle driving device 600 may operate under the control of the controller 170.

The operation system 700 is a system that controls various operations of the vehicle 100. The operation system 700 may operate in the autonomous driving mode. The operation system 700 may perform autonomous driving of the vehicle 100 based on location information and navigation information about the vehicle 100. The operation system 700 may include a driving system 710, a park-out system 740, and a park-in system 750.

According to an embodiment, the operation system 700 may further include a new component in addition to the above-described components or may not include a part of the above-described components.

Meanwhile, the operation system 700 may include a processor. Each individual unit of the operation system 700 may include a processor.

According to an embodiment, if the operation system 700 is implemented in software, the operation system 700 may lie under the controller 170 in concept.

According to an embodiment, the operation system 700 may conceptually include at least one of the UI device 200, the object detection device 300, the communication device 400, the vehicle driving device 600, and the controller 170.

The driving system 710 may control autonomous driving of the vehicle 100.

The driving system 710 may provide a control signal to the vehicle driving device 600 based on vehicle driving information, so that the vehicle 100 may drive. The vehicle driving device 600 may operate based on the control signal received from the driving system 710. Therefore, the vehicle 100 may autonomously drive.

For example, the driving system 710 may perform autonomous driving of the vehicle 100 by providing a control signal to the vehicle driving device 600 based on object information received from the object detection device 300.

For example, the driving system 710 may perform autonomous driving of the vehicle 100 by receiving a signal from an external device through the communication device 400 and providing a control signal to the vehicle driving device 600.

The park-out system 740 may control automatic park-out of the vehicle 100.

The park-out system 740 may provide a control signal to the vehicle driving device 600 based on vehicle driving information, so that the vehicle 100 may leave. The vehicle driving device 600 may operate based on the control signal received from the park-out system 740. Therefore, the vehicle 100 may automatically leave.

For example, the park-out system 740 may perform autonomous park-out of the vehicle 100 by providing a control signal to the vehicle driving device 600 based on object information received from the object detection device 300.

For example, the park-out system 740 may perform park-out of the vehicle 100 by receiving a signal from an external device through the communication device 400 and providing a control signal to the vehicle driving device 600.

The park-in system 750 may control automatic park-in of the vehicle 100.

The park-in system 750 may provide a control signal to the vehicle driving device 600 based on vehicle driving information, so that the vehicle 100 may park. The vehicle driving device 600 may operate based on the control signal received from the park-in system 750. Therefore, the vehicle 100 may automatically park.

For example, the park-in system 750 may perform automatic park-in of the vehicle 100 by providing a control signal to the vehicle driving device 600 based on object information received from the object detection device 300.

For example, the park-in system 750 may perform park-in of the vehicle 100 by receiving a signal from an external device through the communication device 400 and providing a control signal to the vehicle driving device 600.

The navigation system 770 may provide navigation information. The navigation information may include at least one of map information, set destination information, path information, information about various objects on a road, lane information, traffic information, and information about a location of a vehicle.

The navigation system 770 may include a memory and a processor. The memory may store navigation information. The processor may control operation of the navigation system 770.

According to an embodiment, the navigation system 770 may receive information from an external device through the communication device 400 and update pre-stored information using the received information.

According to an embodiment, the navigation system 770 may be classified as a lower-layer component of the UI device 200.

The sensing unit 120 may sense a state of the vehicle 100. The sensing unit 120 may include a posture sensor (e.g., a yaw sensor, a roll sensor, and a pitch sensor), a collision sensor, a wheel sensor, a speed sensor, an inclination sensor, a weight sensor, a heading sensor, a yaw sensor, a gyro sensor, a position module, a vehicle forwarding/backwarding sensor, a battery sensor, a fuel sensor, a tire sensor, a handle rotation-based steering sensor, a vehicle internal temperature sensor, a vehicle internal humidity sensor, an ultrasonic sensor, an illumination sensor, an accelerator pedal position sensor, a brake pedal position sensor, and so on.

The sensing unit 120 may acquire sensing signals for vehicle posture information, vehicle collision information, vehicle heading information, vehicle location information (GPS information), vehicle angle information, vehicle speed information, vehicle acceleration information, vehicle inclination information, vehicle forwarding/backwarding information, battery information, fuel information, tire information, vehicle lamp information, vehicle internal temperature information, vehicle internal humidity information, a steering wheel rotation angle, a vehicle external illuminance, a pressure applied to an accelerator pedal, a pressure applied to a brake pedal, and so on. The information acquired by the sensing unit 120 may be included in vehicle driving information.

The sensing unit 120 may further include an accelerator pedal sensor, a pressure sensor, an engine speed sensor, an Air Flow Sensor (AFS), an Air Temperature Sensor (ATS), a Water Temperature Sensor (WTS), a Throttle Position Sensor (TPS), a Top Dead Center (TDC) sensor, a Crank Angle Sensor (CAS), and so on.

The interface unit 130 serves paths to various types of external devices connected to the vehicle 100. For example, the interface unit 130 may be provided with a port connectable to a mobile terminal, and may be connected to a mobile terminal through the port. In this case, the interface unit 130 may exchange data with the mobile terminal.

Meanwhile, the interface unit 130 may serve as a path in which electric energy is supplied to a connected mobile terminal. If the mobile terminal is electrically connected to the interface unit 130, the interface unit 130 may supply electric energy received from the power supply 190 to the mobile terminal under the control of the controller 170.

The memory 140 is electrically connected to the controller 170. The memory 140 may store basic data for a unit, control data for controlling an operation of the unit, and input and output data. The memory 140 may be any of various storage devices in hardware, such as Read Only Memory (ROM), Random Access Memory (RAM), Erasable and Programmable ROM (EPROM), flash drive, and hard drive. The memory 140 may store various data for overall operations of the vehicle 100, such as programs for processing or controlling in the controller 170.

According to an embodiment, the memory 140 may be integrated with the controller 170, or configured as a lower-layer component of the controller 170.

The power supply 190 may supply power needed for operating each component under the control of the controller 170. Particularly, the power supply 190 may receive power from a battery within the vehicle 100.

The controller 170 may provide overall control to each unit inside the vehicle 100. The controller 170 may be referred to as an Electronic Control Unit (ECU).

If the vehicle 100 is placed in the autonomous driving mode, the controller 170 may perform autonomous driving of the vehicle 100 based on information acquired through devices provided in the vehicle 100. For example, the controller 170 may control the vehicle 100 based on navigation information received from the navigation system 770, and information received from the object detection device 300 or the communication device 400. If the vehicle 100 is placed in the manual mode, the controller 170 may control the vehicle 100 based on an input signal corresponding to a user command, received by the driving manipulation device 500. If the vehicle 100 is placed in the remote control mode, the controller 170 may control the vehicle 100 based on a remote control signal received by the communication device 400.

Various processors and the controller 170 of the vehicle 100 may be implemented in hardware using at least one of Application Specific Integrated Circuits (ASICs), Digital Signal Processor (DSPs), Digital Signal Processing Device (DSPDs), Programmable Logic Device (PLDs), Field Programmable Gate Array (FPGAs), processors, controllers, micro-controllers, microprocessors, and an electrical unit for executing other functions.

The vehicle 100 may include a communication device for conducting V2X communication with an external device.

The external device may be at least one of another vehicle, a mobile terminal, a pedestrian, and an infrastructure facility.

In concept, V2X communication covers V2I communication with a server or infrastructure, V2V communication with another vehicle, and V2P communication with a pedestrian.

The communication device 400 may include a V2X communication unit for conducting V2X communication. The V2X communication unit may include an RF circuit for implementing a V2X communication protocol.

The controller 170 may receive data from an external device through the communication device 400. Data transmitted from an external device to the vehicle 100 may be referred to as Reception (Rx) data.

The controller 170 may transmit data to an external device through the communication device 400. Data transmitted from the vehicle 100 to an external device may be referred to as Transmission (Tx) data.

According to the present disclosure, the controller 170 of the vehicle 100 may configure a reception zone being a range from which Rx data is received, and a transmission zone being a range in which Tx data is transmitted.

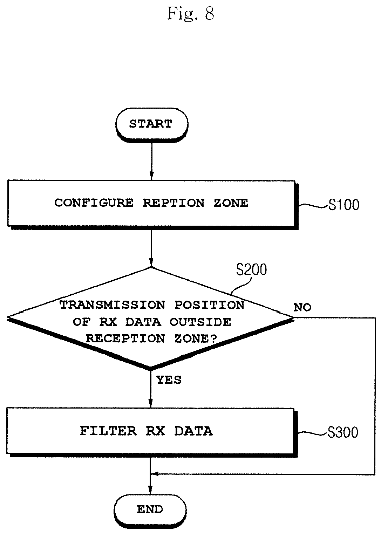

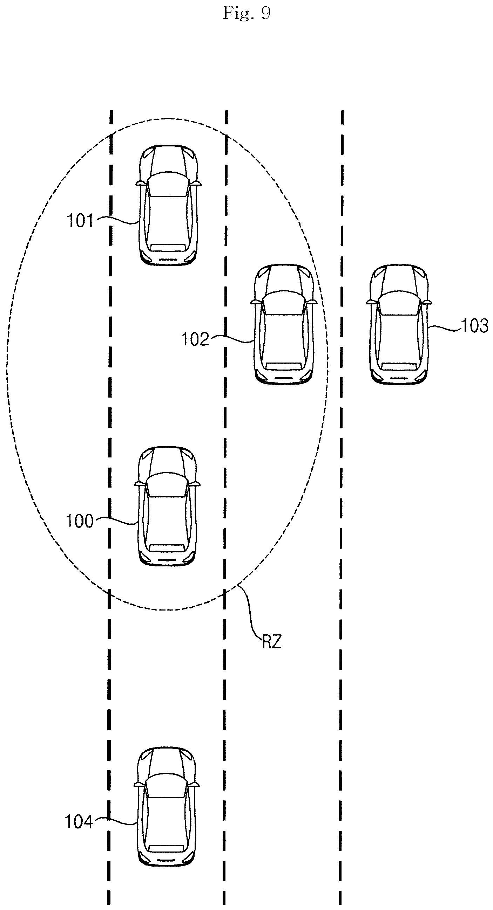

FIGS. 8 and 9 are views illustrating an operation for configuring a reception zone and filtering data according to the configured reception zone in a vehicle according to an embodiment of the present disclosure.

FIG. 8 is a flowchart illustrating an operation for configuring a reception zone and filtering data according to the configured reception zone in the vehicle 100 according to an embodiment of the present disclosure, and FIG. 9 is a top view illustrating the vehicle 100 that configures a reception zone and filters data based on the configured reception zone according to an embodiment of the present disclosure.

The vehicle 100 of the present disclosure configures a reception zone based on acquired information, and if Rx data has been transmitted from the outside of the reception zone, filters the Rx data. Hereinbelow, each step of FIG. 8 will be described in detail.

The controller 170 configures a reception zone based on acquired information (S100).

The information is vehicle driving information acquired through various devices of the vehicle 100. Unless mentioned otherwise, information refers to vehicle driving information in the present disclosure.

According to contents related to information, the vehicle driving information may be classified into ambient situation information related to an ambient situation of the vehicle 100, vehicle state information related to states of various devices in the vehicle 100, and passenger information related to a passenger in the vehicle 100. Accordingly, the vehicle driving information may include at least one of ambient situation information, vehicle state information, and passenger information.

According to devices that provide information, the vehicle driving information may be classified into object information acquired by the object detection device 300, communication information that the communication device 400 receives from an external communication device, a user input received by the UI device 200 or the driving manipulation device 500, navigation information provided by the navigation system 770, sensing information provided by the sensing unit 120, and stored information being information stored in the memory 140. Accordingly, the vehicle driving information may include at least one of object information, communication information, a user input, navigation information, sensing information, information acquired and provided by the interface unit 130, and stored information.

The controller 170 may configure the reception zone based on at least one of ambient situation information and vehicle state information.

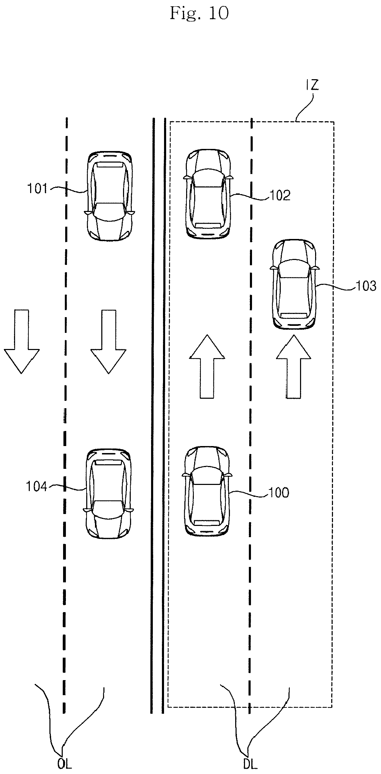

Specific methods for configuring a reception zone by the controller 170 will be described later in detail with reference to FIGS. 10 to 18.

The controller 170 may receive Rx data from an external device outside the vehicle 100 through the communication device 400.

Upon receipt of Rx data through the communication device 400, the controller 170 determines whether a transmission position of the Rx data is outside the reception zone (S200).

The transmission position of Rx data refers to a position at which the Rx data is transmitted. In the embodiment illustrated in FIG. 9, if a plurality of other vehicles 101 to 104 transmit specific data to the vehicle 100, the positions of the data may be the locations of the other vehicles 101 to 104 that have transmitted the data.

Rx data may include information about a transmission position of the Rx data. If the Rx data includes information about the transmission position of the Rx data, the controller 170 may determine the transmission position of the Rx data based on the information.

An area other than the reception zone, around the vehicle 100, may be referred to as a reception restriction zone.

If determining that the transmission position of the Rx data is outside the reception zone, the controller 170 filters the Rx data (S300).

In various computations and control operations, the controller 170 uses not filtered Rx data but non-filtered Rx data.

Since an area outside the reception zone is a reception restriction zone, if determining that the Rx data has been transmitted from the reception restriction zone, the controller 170 may filter the Rx data.

Referring to FIG. 9, the controller 170 may configure a reception zone based on vehicle driving information.

In the embodiment of FIG. 9, a first other vehicle 101 and a second other vehicle 102 are located inside the reception zone, whereas a third other vehicle 103 and a fourth other vehicle 104 are located outside the reception zone.

Upon receipt of Rx data from the first other vehicle 101 and the second other vehicle 102 through the communication device 400, the controller 170 may determine transmission positions of the Rx data are inside the reception zone.

In this case, the controller 170 does not filter the Rx data received from the first other vehicle 101 and the second other vehicle 102. The controller 170 makes various determinations and performs various control operations using the Rx data received from the first other vehicle 101 and the second other vehicle 102.

Upon receipt of Rx data from the third other vehicle 103 and the fourth other vehicle 104 through the communication device 400, the controller 170 may determine transmission positions of the Rx data are outside the reception zone.

In this case, the controller 170 filters the Rx data received from the third other vehicle 103 and the fourth other vehicle 104. The controller 170 does not use the Rx data received from the third other vehicle 103 and the fourth other vehicle 104 in making determinations or performing control operations.

FIGS. 10 to 15 are views illustrating operations for configuring a reception zone according to an ambient situation of a vehicle according to an embodiment of the present disclosure.

Vehicle driving information includes ambient situation information related to an ambient situation of the vehicle 100.

The controller 170 may determine a Region Of Interest (ROI) for the vehicle 100 based on the ambient situation information.

The controller 170 may set the ROI as a reception zone.

Referring to FIG. 10, if the controller 170 determines that the vehicle 100 is driving on a 2-way road based on ambient situation information, the controller 170 may determine an area except for Opposite Lanes (OL) to the vehicle 100 on the 2-way road to be an ROI.

The 2-way road is a road including one or more Driving Lanes (DLs) directed in a driving direction of the vehicle 100 and one or more OLs directed in a direction opposite to the driving direction of the vehicle 100.

A DL refers to a lane running in the driving direction of the vehicle 100.

An OL refers to a lane running in the direction opposite to the driving direction of the vehicle 100.

The controller 170 may determine whether a road on which the vehicle 100 is driving is a 2-way road based on ambient situation information.

For example, the controller 170 may determine whether a road on which the vehicle 100 is traveling is a 2-way road based on at least one of map information received from the navigation system 770 or object information received from the object detection device 300.

If the road on which the vehicle 100 is driving is a 2-way road, the controller 170 may divide the entire area of the 2-way road into a zone with the DLs and a zone with the OLs based on the ambient situation information.

The controller 170 may determine the zone with the DLs in the entire area of the 2-way road to be an ROI.

The controller 170 may determine the ROI to be a reception zone. Accordingly, the controller 170 may determine the zone with the DLs to be the reception zone.

In the embodiment of FIG. 10, the second other vehicle 102 and the third other vehicle 103 are driving on the DLs, whereas the first other vehicle 101 and the fourth other vehicle 104 are driving on the OLs.

The controller 170 may receive data from each of the first to fourth other vehicles 101 to 104 through the communication device 400. In this case, data transmitted by the first other vehicle 101 is referred to as first Rx data, data transmitted by the second other vehicle 102 is referred to as second Rx data, data transmitted by the third other vehicle 103 is referred to as third Rx data, and data transmitted by the fourth other vehicle 104 is referred to as fourth Rx data.

The controller 170 may determine transmission positions of the first to fourth Rx data.

The controller 170 may determine the transmission positions of the first Rx data and the fourth Rx data to be in the zone with the OLs.

The controller 170 may determine the transmission positions of the second Rx data and the third Rx data to be in the zone with the DLs.

Accordingly, the controller 170 may determine the transmission positions of the first Rx data and the fourth Rx data to be outside the reception zone, and the transmission positions of the second Rx data and the third Rx data to be inside the reception zone.

Since the transmission positions of the first Rx data and the fourth Rx data are outside the reception zone, the controller 170 may filter the first Rx data and the fourth Rx data.

Since the transmission positions of the second Rx data and the third Rx data are inside the reception zone, the controller 170 may perform various computations and make various determinations, using the second Rx data and the third Rx data.

Accordingly, the controller 170 may make various determinations regarding the ROI by receiving data only from the DLs. As the controller 170 filters data received from the OLs, the controller 170 filters the unnecessary data, thereby reducing communication congestion.

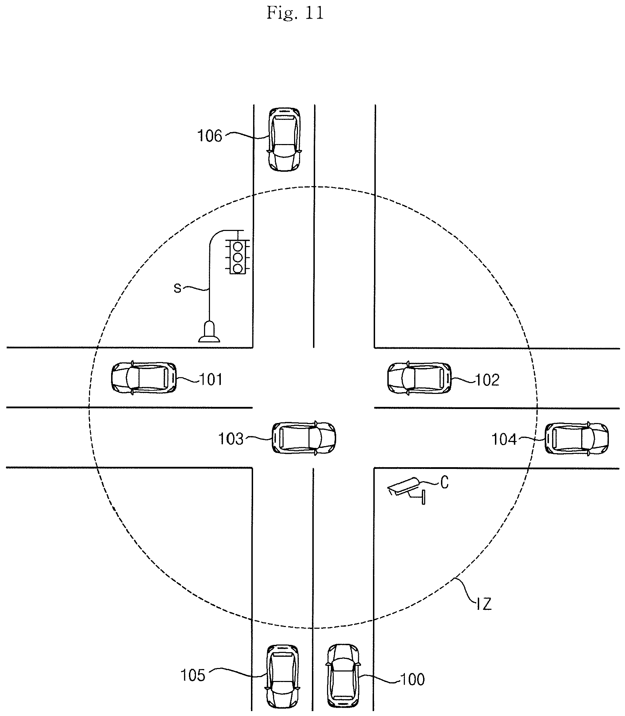

Referring to FIG. 11, if the controller 170 determines that the vehicle 100 will pass through an intersection based on ambient situation information, the controller 170 may determine an area within a predetermined distance from the intersection to be an ROI.

The controller 170 may determine whether the vehicle 100 will pass through an intersection based on ambient situation information.

For example, if the controller 170 determines based on a Set Path (SP) for the vehicle 100, generated by the navigation system, that there is an intersection in the path, the controller 170 may determine that the vehicle 100 will pass through the intersection.

For example, if the controller 170 determines based on object information received from the object detection device that there is an intersection ahead of the vehicle 100, the controller 170 may determine that the vehicle 100 will pass through the intersection.

If the controller 170 determines that the vehicle 100 will pass through the intersection, the controller 170 may determine an area within a predetermined distance from the intersection to be an ROI.

The controller 170 may determine the ROI to be a reception zone. Accordingly, the controller 170 may determine the area within the predetermined distance from the intersection to be the reception zone.

Upon receipt of data from the first, second and third other vehicles 101, 102 and 103, the controller 170 may determine that transmission positions of the Rx data to be inside the reception zone.

A kind of infrastructure, a signal lamp or surveillance camera may broadcast data in a predetermined range.

The controller 170 may receive data from the signal lamp or the surveillance camera. The controller 170 may determine whether the signal lamp or the surveillance camera is located in the reception zone based on the data received from the signal lamp or the surveillance camera. If the controller 170 determines that the signal lamp or the surveillance camera is located in the reception zone, the controller 170 may determine that a transmission position of the Rx data is inside the reception zone.

The controller 170 may use Rx data which is determined to have been transmitted from the reception zone, in various computations and control operations.

Upon receipt of data from fourth, fifth and sixth other vehicles 104, 105 and 106, the controller 170 may determine that transmission positions of the Rx data are outside the reception zone.

In this case, the controller 170 may filter the data received from the fourth, fifth and sixth other vehicles 104, 105 and 106.

Therefore, the controller 170 may make various determinations regarding the ROI by receiving data only from the area within the predetermined distance from the intersection. As the controller 170 filters data received from the outside of the ROI, the controller 170 filters the unnecessary data, thereby reducing communication congestion.

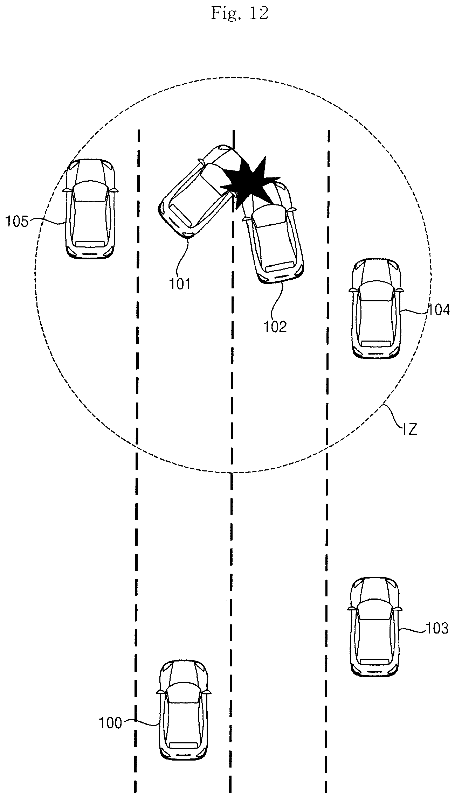

Referring to FIG. 12, if the controller 170 determines that the vehicle 100 will pass through an area in which an accident has occurred based on ambient situation information, the controller 170 may determine the area in which the accident has occurred (hereinafter, referred to as an 'accident area') to be an ROI.

An accident area refers to an area within a predetermined distance from a point at which an accident has occurred.

Accident vehicles 101 and 102 may broadcast accident information to indicate occurrence of the accident and the position of the accident to their neighborhood.

A server or infrastructure installed on a road may transmit traffic information indicating an accident which has occurred on the road, information about the accident, and the position of the accident to vehicles driving on the road.

Traffic information and accident information are included in ambient situation information.

The controller 170 may determine the point at which the accident has occurred based on the traffic information or accident information.

Once the controller 170 determines the point at which the accident has occurred, the controller 170 may determine the accident area to be an ROI.

The controller 170 may determine the ROI to be a reception zone. Accordingly, the controller 170 may determine the accident area to be the reception zone.

The controller 170 may determine whether Rx data has been transmitted from the accident area by determining a transmission position of the Rx data.

In the embodiment of FIG. 12, the controller 170 may determine that data received from the accident vehicles 101 and 102, the fourth other vehicle 104, and the fifth other vehicle 105 have been transmitted from the ROI, that is, the accident area.

The controller 170 may determine that data received from the third other vehicle 103 has been transmitted from the outside of the ROI.

The controller 170 may filter the data received from the third other vehicle 103.

Therefore, the controller 170 may make various determinations regarding the accident area by receiving data only from the accident area. As the controller 170 filters data received from the outside of the accident area, the controller 170 filters the unnecessary data, thereby reducing communication congestion.

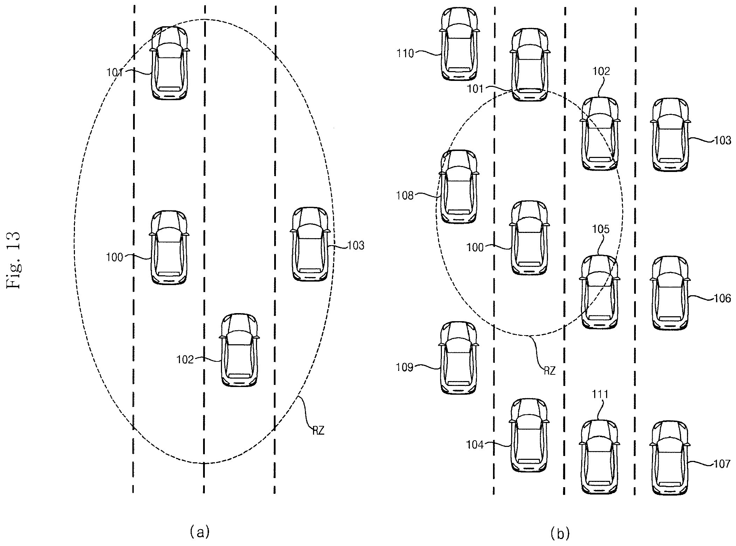

Referring to FIG. 13, the controller 170 may determine the traffic congestion degree of a road on which the vehicle 100 is driving based on ambient situation information, and set a reception zone such that the size of the reception zone is inversely proportional to the traffic congestion degree.

A server or infrastructure installed on a road provides information about a traffic congestion degree representing a traffic load by section. Information about the traffic congestion degree is included in traffic information.

The controller 170 may determine the traffic congestion degree of a section on which the vehicle 100 is driving based on the traffic information. For example, the traffic information may be Transport Protocol Expert group (TPEG) information.

The controller 170 may determine the traffic congestion degree of the section on which the vehicle 100 is driving based on the locations and number of other vehicles detected through the object detection device 300. Since a traffic congestion degree may correspond to the density of vehicles in a specific area, the controller 170 may determine the traffic congestion degree of the surroundings of the vehicle 100 based on the density of vehicles determined based on the locations and number of other vehicles around the vehicle 100.

The controller 170 may set a reception zone such that the size of the reception zone is inversely proportional to the traffic congestion degree.

Accordingly, as the traffic congestion degree increases, the controller 170 may decrease the size of the reception zone, and as the traffic congestion degree decreases, the controller 170 may increase the size of the reception zone.

Reception zone sizes mapped to traffic congestion degrees may be stored in a preset look-up table. The look-up table is stored in the memory 140.

(a) of FIG. 13 illustrates a less congested traffic situation than (b) of FIG. 13. (b) illustrates a more congested traffic situation than (a).

The controller 170 may set a relatively large reception zone in the situation of (a). The controller 170 may set a relatively small reception zone in the situation of (b). Therefore, the reception zone in the situation of (a) is larger than the reception zone in the situation of (b).

Because as the traffic congestion degree is higher, other vehicles are populated more densely around the vehicle 100, the vehicle 100 receives more data, resulting in increased communication congestion. According to the present disclosure, the vehicle 100 decreases the size of a reception zone for an increased traffic congestion degree, thereby reducing the communication congestion.

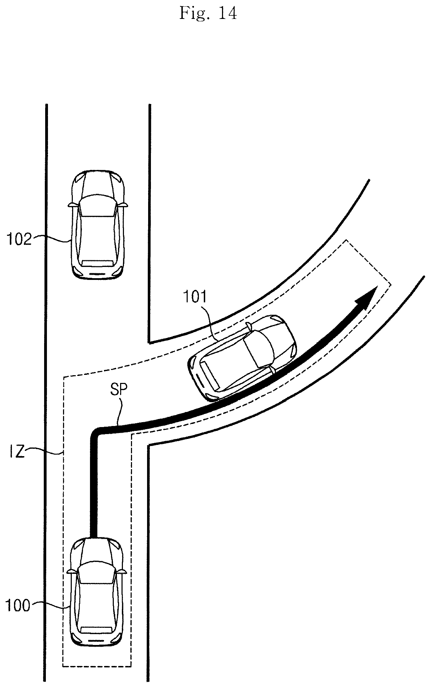

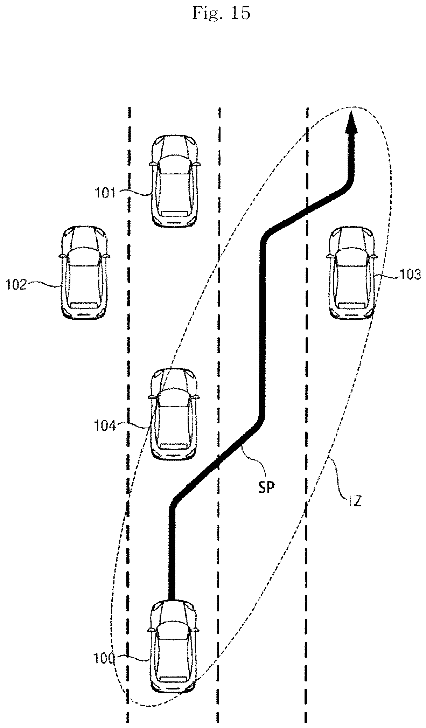

Referring to FIGS. 14 and 15, the controller 170 may determine an area corresponding to an SP of the vehicle 100 to be an ROI, based on ambient situation information and navigation information.

Vehicle driving information may further include navigation information provided by the navigation system 770 of the vehicle 100.

The SP of the vehicle 100 may be a path in which the vehicle 100 will reach a pre-input destination.

The navigation system 770 may generate the SP of the vehicle 100 based on location information about the vehicle 100, map information, traffic information, and an input destination.

The navigation system 770 may provide information about the SP to the controller 170.

An area corresponding to the SP of the vehicle 100 may be an area within a predetermined distance from the SP of the vehicle 100.

In the embodiment of FIG. 14, the controller 170 may determine a road corresponding to an SP of the vehicle 100 between two branched roads based on ambient situation information and navigation information.

The controller 170 may determine the road corresponding to the SP of the vehicle 100 between the two branched roads to be an ROI.

The controller 170 may determine a road on which the vehicle 100 drives along the SP from a current location to be the ROI.

The controller 170 may determine the ROI to be a reception zone.

The controller 170 may determine that data received from the first other vehicle 101 driving in the SP has been transmitted from the reception zone. The controller 170 may make various determinations regarding the SP, using the data received from the first other vehicle 101.

The controller 170 may determine that data received from the second other vehicle 101 driving in a path other than the SP has been transmitted from the outside of the reception zone.

The controller 170 may filter the data received from the second other vehicle 102.

As the controller 170 filters the data received from the second other vehicle 102 that has no relation to the SP, the controller 170 may reduce communication congestion.

In the embodiment of FIG. 15, the controller 170 may determine an area corresponding to an SP of the vehicle 100 on a multi-lane road including a plurality of lane, based on ambient situation information and navigation information.

The controller 170 may determine the area corresponding to the SP of the vehicle 100 on the multi-lane road to be an ROI.

The controller 170 may determine the ROI to be a reception zone.

The controller 170 may determine that data received from the third other vehicle 103 and the fourth other vehicle 104 have been transmitted from the reception zone.

The controller 170 may make various determinations regarding the area corresponding the SP of the vehicle 100, using the data received from the third other vehicle 103 and the fourth other vehicle 104.

The controller 170 may determine that data received from the first other vehicle 101 and the second other vehicle 102 located outside the ROI have been transmitted from the outside of the reception zone.

The controller 170 may filter the data received from the first other vehicle 101 and the second other vehicle 102.

As the controller 170 filters the data received from the first other vehicle 101 and the second other vehicle 102 which are not related to the SP, the controller 170 may reduce communication congestion.

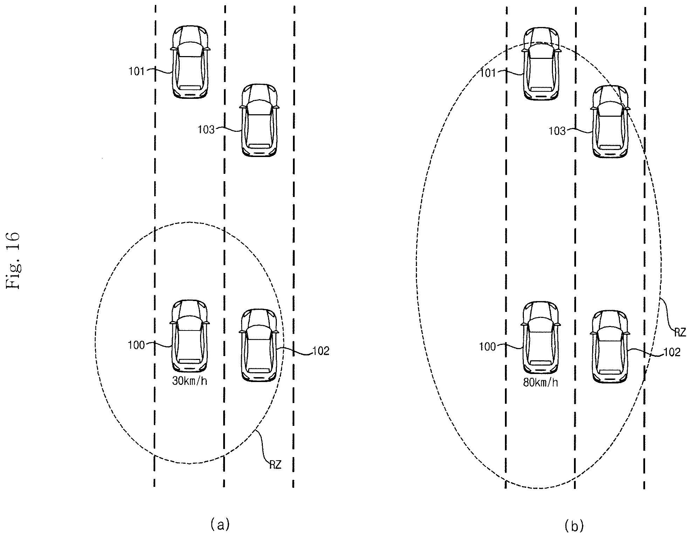

FIGS. 16, 17 and 18 are views illustrating operations for configuring a reception zone according to a vehicle state in a vehicle according to an embodiment of the present disclosure.

Vehicle driving information includes vehicle state information representing operation states of various devices of the vehicle 100.

The controller 170 may configure a reception zone based on the vehicle state information.

The controller 170 may determine an ROI for the vehicle 100 based on the vehicle state information. The controller 170 may set the ROI as a reception zone.

Referring to FIG. 16, the controller 170 may determine a speed of the vehicle 100 based on vehicle state information, and configure a reception zone such that the size of the reception zone is proportional to the speed of the vehicle 100.

The vehicle state information may include information about the speed of the vehicle 100.

The controller 170 may determine a current speed of the vehicle 100 based on the vehicle state information.

The controller 170 may determine the size of the reception zone so that the size of the reception zone may be proportional to the speed of the vehicle 100.

As the speed of the vehicle 100 increases, the controller 170 may increase the size of the reception zone.

As the speed of the vehicle 100 decreases, the controller 170 may decrease the size of the reception zone.

Reception zone sizes mapped to speeds of the vehicle 100 may be stored in a preset look-up table. The look-up table is stored in the memory 140.

In (a) of FIG. 16, it is assumed that the speed of the vehicle 100 is 30km/h.

The controller 170 may determine the size of a reception zone based on the speed of the vehicle 100.

The controller 170 may configure a reception zone according to the determined reception zone size.

The controller 170 may determine that data received from the second other vehicle 102 has been transmitted from the reception zone.

The controller 170 may determine that data received from the first other vehicle 101 and the third other vehicle 103 have been transmitted from the outside of the reception zone.

The controller 170 filters the data received from the first other vehicle 101 and the third other vehicle 103.

If the vehicle 100 is relatively slow, the vehicle 100 does not need to receive data from a remote place. Accordingly, the vehicle 100 of the present disclosure may adjust the size of a reception zone according to the speed of the vehicle. Thus, the vehicle 100 filters data with low importance, thereby reducing communication congestion.

In (b) of FIG. 16, it is assumed that the speed of the vehicle 100 is 80km/h.

In this case, the controller 170 may configure a larger reception zone than when the speed of the vehicle 100 is 30km/h.

The controller 170 may determine that data received from the first other vehicle 101, the second other vehicle 102, and the third other vehicle 103 have been transmitted from the reception zone.

The controller 170 may make various determinations, using the data received from the first other vehicle 101, the second other vehicle 102, and the third other vehicle 103.

If the vehicle 100 is relatively fast, the vehicle 100 needs to receive data from a remote place. Accordingly, when the vehicle 100 drives fast, the vehicle 100 may increase the size of the reception zone, thereby avoiding filtering of necessary data in the present disclosure.

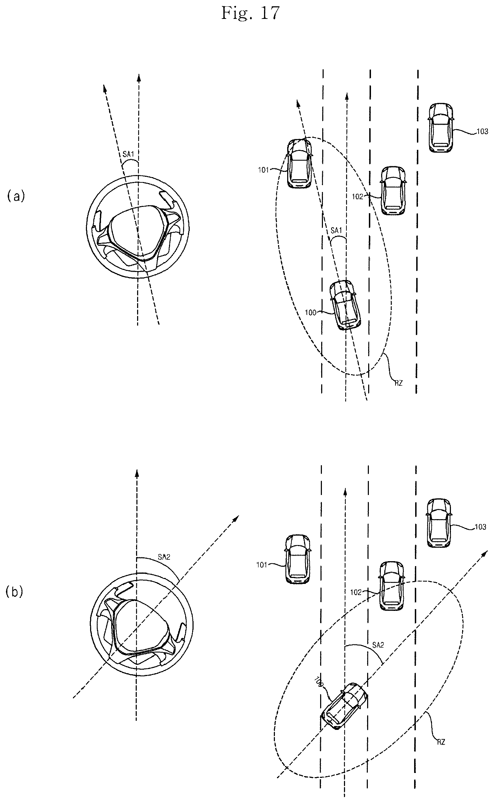

Referring to FIG. 17, the controller 170 may determine the direction and size of a steering angle based on vehicle state information, and configure a reception zone in correspondence with the direction and size of the steering angle.

The vehicle state information includes information about steering of the vehicle, received through the steering input device 510.

The steering angle may be a steering angle of a front wheel of the vehicle 100.

The direction of the steering angle may be the left or right direction with respect to the front of the vehicle 100.

The size of the steering angle is the absolute value of the size of the steering angle.

The controller 170 may determine the direction and size of the steering angle based on the information about steering of the vehicle 100.

In the embodiment of (a), the controller 170 may determine that the direction of a steering angle is left and the size of the steering angle is a first angle SA1.

In the embodiment of (b), the controller 170 may determine that the direction of a steering angle is right and the size of the steering angle is a second angle SA2.

The controller 170 may configure a reception zone in correspondence with the direction and size of a steering angle.

The controller 170 may configure the reception zone to be inclined according to the direction of the steering angle.

If the controller 170 configures the reception zone to be inclined, the controller 170 may configure the reception zone so that the inclination of the reception zone is proportional to the size of the steering angle.

In the embodiment of (a), the controller 170 may configure a reception zone to be inclined to the left at the first angle SA1 in correspondence with the direction and size of the steering angle.

The controller 170 may determine that data received from the first other vehicle 101 has been transmitted from the reception zone.

The controller 170 may determine that data received from the second other vehicle 102 and the third other vehicle 103 have been transmitted from the outside of the reception zone.

The controller 170 may filter the data received from the second other vehicle 102 and the third other vehicle 103.

In the embodiment of (b), the controller 170 may configure a reception zone to be inclined to the right at the second angle SA2 in correspondence with the direction and size of the steering angle.

The controller 170 may determine that data received from the second other vehicle 102 has been transmitted from the reception zone.

The controller 170 may determine that data received from the first other vehicle 101 and the third other vehicle 103 have been transmitted from the outside of the reception zone.

The controller 170 may filter the data received from the first other vehicle 101 and the third other vehicle 103.

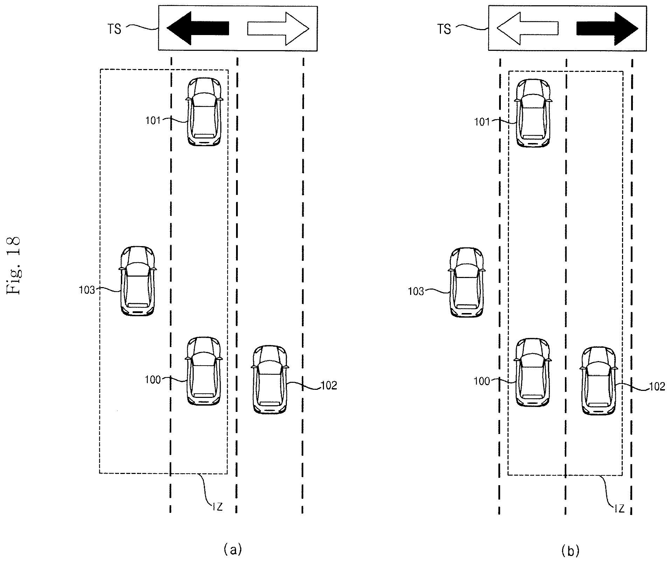

Referring to FIG. 18, the controller 170 may determine operations of turn signal lamps based on vehicle state information, and configure a lane corresponding to the direction of a turn signal lamp and a driving lane of the vehicle 100 as a reception zone.

The vehicle state information may include information about an operation of a turn signal lamp provided in the vehicle 100.

The controller 170 may determine whether a turn signal lamp has been turned on, and the direction corresponding to the turned-on turn signal lamp, based on the information about the operation of the turn signal lamp.

If the controller 170 determines that a turn signal lamp has been turned on, the controller 170 may set a lane directed in the direction of the turned-on turn signal lamp and the driving lane of the vehicle 100 as an ROI.

Referring to the embodiment illustrated in (a), if the controller 170 determines that a right turn signal lamp of the vehicle 100 has been turned on, the controller 170 may set a lane to the right of the vehicle 100 and the driving lane of the vehicle 100 as the ROI.

The controller 170 may set the ROI as a reception zone, and determine that data received from the first other vehicle 101 or the third other vehicle 103 has been transmitted from the reception zone.

Therefore, the controller 170 does not filter the data received from the first other vehicle 101 or the third other vehicle 103.

The controller 170 may determine a lane change timing of the vehicle 100, using the data received from the first other vehicle 101 or the third other vehicle 103.

The controller 170 may control the vehicle 100 based on the determined lane change timing or notify the driver of the lane change timing.

The controller 170 may determine that data received from the second other vehicle 102 has been transmitted from the outside of the reception zone.

The controller 170 may filter the data received from the second other vehicle 102. Since the data received from the second other vehicle 102 is not needed at a timing of switching to a left lane, the vehicle 100 of the present disclosure filters the unnecessary data, thereby reducing communication congestion.

Referring to the embodiment illustrated in (b), if the controller 170 determines that a left turn signal lamp of the vehicle 100 has been turned on, the controller 170 may set a lane to the left of the vehicle 100 and the driving lane of the vehicle 100 as an ROI.

The controller 170 may set the ROI as a reception zone, and determine that data received from the first other vehicle 101 or the second other vehicle 102 has been transmitted from the reception zone.

Therefore, the controller 170 does not filter the data received from the first other vehicle 101 or the second other vehicle 102.

The controller 170 may determine a lane change timing of the vehicle 100, using the data received from the first other vehicle 101 or the second other vehicle 102.

The controller 170 may control the vehicle 100 based on the determined lane change timing or notify the driver of the lane change timing.

The controller 170 may determine that data received from the third other vehicle 103 has been transmitted from the outside of the reception zone.

The controller 170 may filter the data received from the third other vehicle 103. Since the data received from the third other vehicle 103 is not needed at a timing of switching to a right lane, the vehicle 100 of the present disclosure filters the unnecessary data, thereby reducing communication congestion.

In an embodiment different from the embodiments of FIG. 18, the controller 170 may set two lanes directed in the direction of a turned-on turn signal lamp and a lane in which the vehicle 100 is driving (hereinafter, referred to as a 'driving lane') as an ROI. The controller 170 sets the three lanes as the ROI, and sets the ROI as a reception zone. Accordingly, the three lanes become the reception zone.

In this case, the vehicle 100 does not filter data received from a lane to which the vehicle 100 is to switch (hereinafter, referred to a 'first side lane'), a lane on a side of the first side lane (hereinafter, referred to as a 'second side lane'), and the driving lane, and filters data received from other areas.

The controller 170 may further determine based on data received from the second side lane whether another vehicle driving in the second side lane will enter the first side lane.

If determining based on ambient situation information and vehicle state information that another vehicle driving in the second side lane and the vehicle 100 will enter the first side lane, the controller 170 may control the vehicle 100 not to enter the first side lane.

Or if determining based on ambient situation information and vehicle state information that another vehicle driving in the second side lane and the vehicle 100 will enter the first side lane, the controller 170 may transmit a message requesting holding of lane switching to the other vehicle.

In the autonomous driving mode, if determining that another vehicle driving in the second side lane will enter the first side lane, the controller 170 may delay lane switching of the vehicle 100 to prevent simultaneous entry of the other vehicle and the vehicle 100 into the first side lane.

In the manual mode, if determining that another vehicle driving in the second side lane will enter the first side lane, the controller 170 may output an alarm through the output unit 250 to prevent simultaneous entry of the other vehicle and the vehicle 100 into the first side lane.

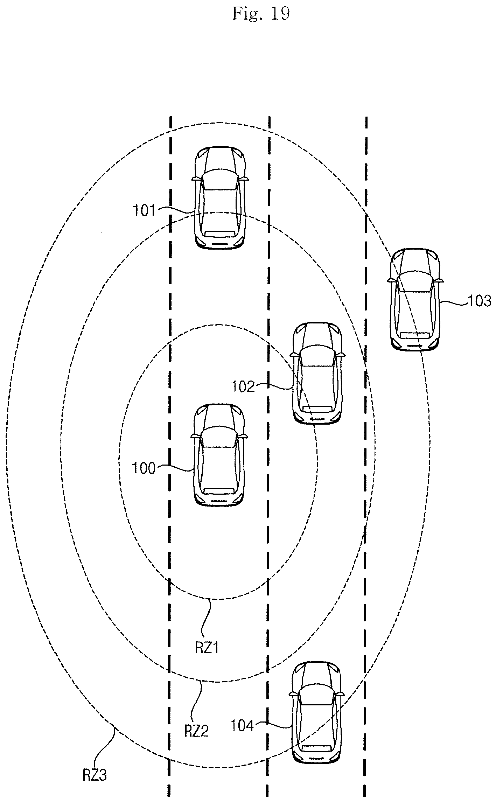

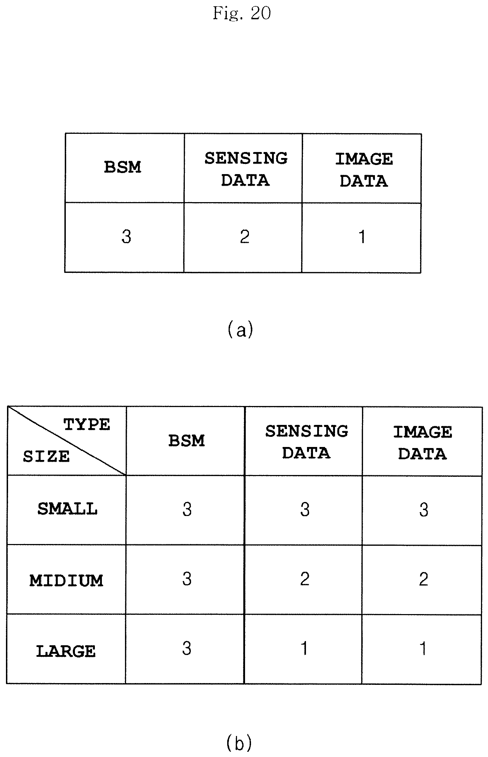

FIGS. 19 and 20 are views illustrating an operation for configuring a reception zone according to the class of Rx data in a vehicle, and tables used to determine the class of Rx data according to an embodiment of the present disclosure.

Referring to FIG. 19, the controller 170 may configure different reception zones according to the classes of Rx data.

Vehicle driving information includes communication information provided by the communication device 400. The communication information includes information about Rx data.

The information about the Rx data may include information about the type of the Rx data. For example, the type of the Rx data may be Basic Safety Message (BSM), sensing data, or image data.

A BSM is data about a data transmission entity. For example, the BSM may include information about the type of a data transmission entity (e.g., vehicle, infrastructure, server, mobile terminal, or the like), information about the transmission position of the data, contents to be informed (e.g., accident occurrence, a signal of a signal lamp, a traffic regulation, a traffic state, or the like), and information about a control state of a vehicle that has transmitted the data. In general, a BSM may be small in size, relative to other types of data.

Sensing data is raw data provided by various sensors of a data transmission device. For example, the sensing data may be raw data provided by an ultrasonic sensor, a LiDAR sensor, a RADAR sensor, an IR sensor, and so on of another vehicle. In general, sensing data may be larger than a BSM and smaller than image data, in size, because the sensing data is raw data before being processed.

Image data may be data provided by a camera of a data transmission device. For example, the image data may be provided by a front camera and a rear camera of another vehicle. For example, the image data may be provided by a surveillance camera installed on a road. For example, the image data may be provided by a camera of a pedestrian's mobile terminal. In general, image data may be larger in size than a BSM or sensing data.

The information about the Rx data may further include information about the size of the Rx data.

The controller 170 may determine the class of the Rx data based on the information about the Rx data.

For example, the class of the Rx data may be numerically represented. For example, the class of the Rx data may be class 1, class 2, or class 3.

According to an embodiment of the present disclosure, the controller 170 may determine the class of the Rx data based on a predetermined class table listing classes according to the types of Rx data.

For example, if the Rx data is a BSM, a preset class for the BSM may be class 3. For example, if the Rx data is sensing data, a preset class for the sensing data may be class 2. For example, if the Rx data is image data, a preset class for the image data may be class 1.

According to another embodiment of the present disclosure, the controller 170 may determine the class of the Rx data based on a preset class table listing classes according to the types and sizes of Rx data. In this case, the class of the Rx data may be inversely proportional to the size of the Rx data. The class tables will be described later in greater detail with reference to FIG. 20.

The controller 170 may configure a predetermined area for the determined class of the Rx data (hereinafter, referred to as a 'per-class reception zone) as a reception zone.

The size of a per-class reception zone may be proportional to the class of Rx data. As the Rx data has a higher class, a reception zone corresponding to the Rx data is larger. Since as the size of a reception zone is larger, a range in which data may be used without filtering is larger, there is a higher possibility of using Rx data without filtering if the Rx data has a higher class.

In the embodiment of FIG. 19, a reception zone preset for Rx data of class 1 is a first reception zone RZ1, a reception zone preset for Rx data of class 2 is a second reception zone RZ2, and a reception zone preset for Rx data of class 3 is a third reception zone RZ3.

The embodiment of FIG. 19 is based on the assumption that each of the first to fourth other vehicles 101, 102, 103, and 104 transmits every class of Rx data.

The first reception zone RZ1 and the second reception zone RZ2 are included in the third reception zone RZ3. The first reception zone RZ1 is also included in the second reception zone RZ2.

The first reception zone RZ1 is the intersection of the first, second, and third reception zones RZ1, RZ2, and RZ3. Therefore, the first reception zone RZ1 is at once the second reception zone RZ2 and the third reception zone RZ3.

Since the first, second, and third reception zones RZ1, RZ2, and RZ3 are overlapped over the first reception zone RZ1, the controller 170 may determine the transmission position of Rx data received from the second other vehicle 102 is within the first, second, and third reception zones RZ1, RZ2, and RZ3.

The controller 170 may receive all of class-1 Rx data, class-2 Rx data, and class-3 Rx data from the second other vehicle 102. The controller 170 does not filter the class-1 Rx data, class-2 Rx data, and class-3 Rx data received from the second other vehicle 102. For example, the controller 170 uses all of a BSM, sensing data, and image data received from the second other vehicle 102 without filtering.

That is, since the first, second, and third reception zones RZ1, RZ2, and RZ3 are overlapped over the first reception zone RZ1, the controller 170 does not perform class-based filtering on Rx data received from the first reception zone RZ1.

The whole second reception zone RZ2 is included in the third reception zone RZ3. Accordingly, the whole second reception zone RZ2 is also the third reception zone RZ3. The remaining area of the second reception zone RZ2 except for the first reception zone RZ1 is at once the second reception zone RZ2 and the third reception zone RZ3.

The controller 170 may determine the transmission position of Rx data received from the first other vehicle 101 is outside the first reception zone RZ1 and inside second reception zone RZ2 and the third reception zone RZ3.

Accordingly, the controller 170 filters class-1 data among Rx data received from the first other vehicle 101, without filtering class-2 data and class-3 data among the Rx data received from the first other vehicle 101. The controller 170 makes various determinations using only the class-3 data and the class-3 data among the Rx data received from the first other vehicle 101.

The controller 170 may determine the transmission position of Rx data received from the third other vehicle 103 or the fourth other vehicle 104 is inside the third reception zone RZ3 and outside the second reception zone RZ2 and the first reception zone RZ1.

Accordingly, the controller 170 uses only class-3 data, while filtering class-1 data or class-2 data among Rx data received from the third other vehicle 103 or the fourth other vehicle 104.

(a) of FIG. 20 is a predetermined class table listing classes according to Rx data types.

For example, if the type of Rx data is BSM, a preset class for BSM may be class 3. Therefore, a reception zone for the BSM may be largest.

For example, if the type of Rx data is sensing data, a preset class for sensing data may be class 2. Therefore, a reception zone for the sensing data may be smaller than the reception zone for the BSM but larger than a reception zone for image data.

For example, if the type of Rx data is image data, a preset class for BSM may be class 1. Therefore, the reception zone for the image data may be smallest.

The preset class table listing classes according to Rx data types is stored in the memory 140.

(b) of FIG. 20 is a class table preset according to the types and sizes of Rx data.

For example, BSM may be class 3 irrespective of the size of Rx data.

For example, sensing data and image data may have different classes according to their data sizes.

Because the class of Rx data is inversely proportional to the size of the Rx data, larger sensing data and larger image data may have lower classes.

Criteria for data sizes may be empirically determined. For example, a small size may refer to 1kb to 100kb. For example, a medium size may refer to 101kb to 1mb. For example, a large size may refer to a size exceeding 1mb.

The predetermined class table listing classes according to the types and sizes of Rx data is stored in the memory 140.

According to another embodiment of the present disclosure, the controller 170 may determine an ROI for the vehicle 100 based on ambient situation information. Once the controller 170 determines that the transmission position of Rx data is within the ROI, the controller 170 may not perform class-based filtering on the Rx data. In this case, the controller 170 determines the ROI in any of the methods described before with reference to FIGS. 10 to 18.

If determining that the transmission of Rx data is within the ROI, the controller 170 may use the Rx data in various computations or determinations without filtering the Rx data irrespective of the class of the Rx data.

For example, the controller 170 may determine an accident area as an ROI. If determining that the transmission position of Rx data is within the accident area, the controller 170 may make various determination using the Rx data, even though determining that the class of the Rx data is class 1 and the transmission position of the Rx data is outside of a reception zone for class 1.

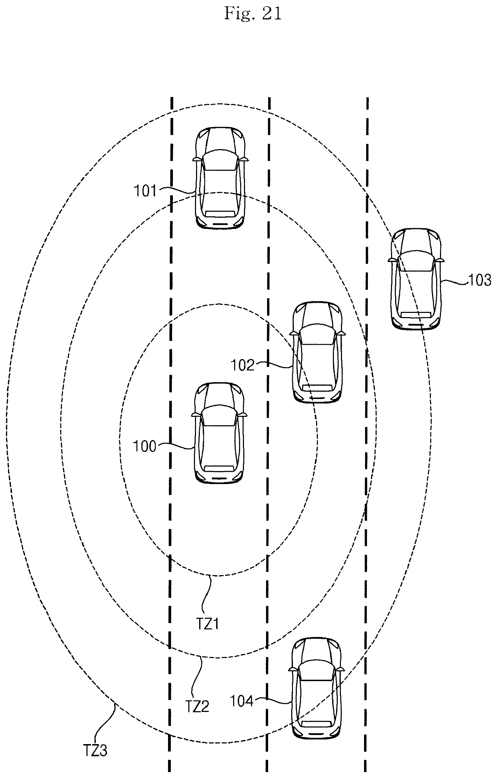

FIG. 21 is a view illustrating an operation for configuring a transmission zone according to the class of Tx data according to an embodiment of the present disclosure.

If the controller 170 transmits data through the communication device 400, the controller 170 may configure a Tx zone based on information. The information may be vehicle driving information.

The transmission zone is an area corresponding to a range in which data is transmitted from the communication device 400. The transmission zone is an area within a predetermined distance from the vehicle 100.

The controller 170 adjusts the transmission power of the communication device 400 based on the configured transmission zone. The controller 170 adjusts the transmission power of the communication device 400 so that Tx data may be transmitted to the configured transmission zone.

The controller 170 may adjust the size of the transmission zone by adjusting the transmission power of the communication device 400.

If the transmission power of the communication device 400 increases, the size of the transmission zone also increases. The controller 170 may increase the size of the transmission zone by increasing the transmission power of the communication device 400.

If the transmission power of the communication device 400 decreases, the size of the transmission zone also decreases. The controller 170 may decrease the size of the transmission zone by decreasing the transmission power of the communication device 400.

The vehicle driving information includes information about data transmitted through the communication device 400 (hereinafter, referred to as 'Tx data').

The information about the Tx data may include information about the type of the Tx data.

The information about the Tx data may further include information about the size of the Tx data.

The controller 170 may determine the class of the Tx data based on the information about the Tx data.

For example, the controller 170 may determine the class of the Tx data, referring to a predetermined class table listing classes according to the types of Tx data. The predetermined class table listing classes according to the types of Tx data is identical to the predetermined class table listing classes according to the types of Rx data, illustrated in (a) of FIG. 20.

For example, the controller 170 may determine the class of the Tx data, referring to a predetermined class table listing according to the types and sizes of Tx data. The predetermined class table listing according to the types and sizes of Tx data is identical to the predetermined class table listing according to the types and sizes of Rx data, illustrated in (b) of FIG. 20.

The controller 170 may configure a predetermined area for the determined class of the Tx data (hereinafter, referred to as a 'per-class transmission zone') as a transmission zone.

The size of the per-class transmission zone is proportional to the class of the Tx data.

Thus, as the Tx data has a higher class, a transmission zone corresponding to the Tx data is larger. As the Tx data has a lower class, the transmission zone corresponding to the Tx data is smaller.

Referring to FIG. 21, the controller 170 may configure different transmission zones according to the classes of Tx data.

When transmitting class-1 Tx data, the controller 170 may transmit the class-1 Tx data to a first transmission zone TZ1 by adjusting the transmission power of the communication device 400. For example, the controller 170 determines image data acquired through the camera 310 of the vehicle 100 to be class-1 data. When the controller 170 transmits the image data, the controller 170 adjusts the transmission power of the communication device 400 so that the Tx data may be transmitted to the first transmission zone TZ1. Accordingly, the second other vehicle 102 located within the first transmission zone TZ1 may receive the image data from the vehicle 100.

When transmitting class-2 Tx data, the controller 170 may transmit the class-2 Tx data to a second transmission zone TZ2 by adjusting the transmission power of the communication device 400. For example, the controller 170 determines sensing data acquired through various sensors of the vehicle 100 to be class-2 data. When the controller 170 transmits the sensing data, the controller 170 adjusts the transmission power of the communication device 400 so that the Tx data may be transmitted to the second transmission zone TZ2. Accordingly, the second other vehicle 102 and the first other vehicle 101 located within the second transmission zone TZ2 may receive the sensing data from the vehicle 100.

When transmitting class-3 Tx data, the controller 170 may transmit the class-3 Tx data to a third transmission zone TZ3 by adjusting the transmission power of the communication device 400. For example, the controller 170 determines a BSM of the vehicle 100 to be class-3 data. When the controller 170 transmits the BSM, the controller 170 adjusts the transmission power of the communication device 400 so that the Tx data may be transmitted to the third transmission zone TZ3. Accordingly, the second other vehicle 102, the first other vehicle 101, the third other vehicle 103, and the fourth other vehicle 104 located within the third transmission zone TZ3 may receive the BSM from the vehicle 100.

The vehicle 100 of the present disclosure transmits data of a higher class to a farther place, and data of a lower class to a nearer place, thereby reducing communication congestion.

According to another embodiment of the present disclosure, the controller 170 may set the size of a transmission zone in inverse proportion to a channel congestion degree based on information about the channel congestion degree.

Vehicle driving information may include information about the congestion degree of a channel used for V2X communication.

The congestion degree of a channel used for communication represents a ratio of a data transmission duration to a total time in a specific frequency bandwidth used for V2X communication. For example, as data is transmitted longer in the specific frequency bandwidth, it may be considered that the congestion degree of the channel increases.

The communication device 400 may be provided with an RF chipset for measuring a channel congestion degree.

The controller 170 may determine the congestion degree of the channel used for V2X communication based on information about the congestion degree of the channel.

The controller 170 may determine the size of a transmission zone based on information about the congestion degree of the channel.

The controller 170 may determine the size of the transmission zone in inverse proportion to the congestion degree of the channel.

For example, the controller 170 may configure a smaller transmission zone for a larger channel congestion degree. If the channel congestion degree is high, the controller 170 needs to reduce the channel congestion degree by decreasing the transmission zone in size.

For example, the controller 170 may configure a larger transmission zone for a lower channel congestion degree. If the channel congestion degree is low, it does not matter to increase the transmission zone in size.

Since the vehicle 100 of the present disclosure sets the size of a transmission zone to be inversely proportional to the congestion degree of a channel, communication congestion is reduced.

According to another embodiment of the present disclosure, the controller 170 determines an ROI for the vehicle 100 based on at least one of ambient situation information and vehicle state information, and configure a transmission zone such that the ROI is included in the transmission zone. The controller 170 determines the ROI in any of the methods descried before with reference to FIGS. 10 to 18.

The controller 170 may determine the size of a transmission zone so that the ROI may be included in the transmission zone.

When transmitting data by V2X communication, the communication device 400 broadcasts the data. Therefore, the shape of the transmission zone may be close to a circle with a radius being a distance corresponding to the transmission power of the communication device 400 with respect to a current location of the vehicle 100.

The controller 170 may determine the transmission power of the transmission device 400, which enables inclusion of the ROI in the transmission zone. The controller 170 transmits Tx data with the determined transmission power. The resulting configured transmission zone may include the ROI.

In this manner, as the vehicle 100 of the present disclosure enables transmission of the Tx data to the ROI, information about the vehicle 100 may be transmitted to another vehicle, a pedestrian, and infrastructure in the ROI.

According to another embodiment of the present disclosure, if determining that the vehicle 100 performs platoon driving, the controller 170 may determine the type of Tx data based on the location of the vehicle 100 in a vehicle platoon.

The controller 170 may determine whether the vehicle 100 performs platoon driving based on vehicle state information. The controller 170 may determine the location of the vehicle 100 in the vehicle platoon based on data received from another vehicle included in the same platoon.

For example, if determining that the vehicle 100 is a leading vehicle in the platoon, the controller 170 may transmit data related to what is ahead of the vehicle 100 to other vehicles in the same platoon. The data related to what is ahead of the vehicle 100 may be Rx data whose transmission position is determined to be ahead of the vehicle 100, and image data or sensing data acquired by a camera or a sensor provided on the front of the vehicle 100.

For example, if determining that the vehicle 100 is a trailing vehicle in the platoon, the controller 170 may transmit data related to what is behind the vehicle 100 to other vehicles in the same platoon. The data related to what is behind the vehicle 100 may be Rx data whose transmission position is determined to be behind the vehicle 100, and image data or sensing data acquired by a camera or a sensor provided on the rear of the vehicle 100.

For example, if determining that the vehicle 100 is neither a leading vehicle nor a trailing vehicle in the platoon, the controller 170 may transmit only a BSM of the vehicle 100 to other vehicles in the same platoon.

According to another embodiment of the present disclosure, the controller 170 may prioritize Rx data based on the types of other vehicles that have transmitted the Rx data or the types of object detection devices provided in the other vehicles.

The priority level of Rx data may be the priority level of using the Rx data in a specific computation or determination.

The controller 170 may determine the type of another vehicle that has transmitted Rx data or the type of an object detection device of the other vehicle, based on the Rx data.

For example, upon receipt of a plurality of sensing data, the controller 170 may prioritize the plurality of sensing data based on the specifications of sensors that have acquired the sensing data. The controller 170 may prioritize the plurality of sensing data in comprehensive consideration of the accuracies, sensitivities, and power of the sensors.

For example, upon receipt of a plurality of image data about what lies ahead, the controller 170 may prioritize the plurality of image data of what lies ahead according to the specifications of cameras that have acquired the image data or the types of other vehicles. For example, the controller 170 may prioritize the plurality of image data of what lies ahead in comprehensive consideration of the accuracies, sensitivities, and power of front cameras. For example, the controller 170 may prioritize the plurality of image data of what lies ahead in such a manner that image data of what lies ahead has a higher priority level if the height of another vehicle that has transmitted the image data is larger. This is because a taller vehicle captures an image of what lies ahead from a higher point, thus facilitating securing of the view of an image.

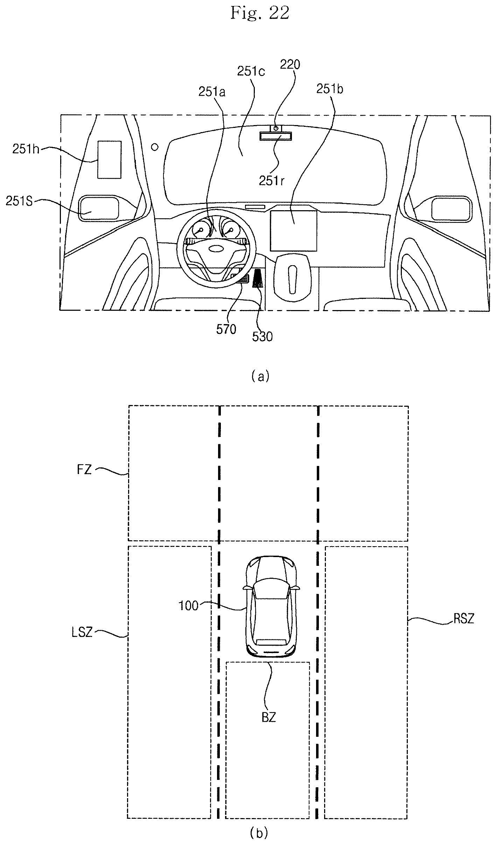

FIG. 22 is a view illustrating an operation for determining an output position of an alarm according to the transmission position of Rx data in a vehicle according to an embodiment of the present disclosure.

Referring to (a) of FIG. 22, the vehicle 100 may include a plurality of display units.

The plurality of display units may include side mirror displays 251s disposed on both side mirrors, window displays 251h disposed on windows beside front seats, a windshield display 251c disposed on the windshield, a Center Information Display (CID) 251b disposed on the center of the instrument panel, and a room mirror display 251r disposed on a room mirror.

The controller 170 may generate an alarm based on Rx data in order to provide specific information to a user. For example, the alarm may be any of a collision alarm indicating collision with a specific object, a general alarm providing information about a specific object, and a special alarm indicating information that the user should be notified of.

The alarm may be a graphic object displayed on the display unit 251. For example, the alarm may be text or a figure image. The alarm may further include a sound output through the audio output unit 252.

The controller 170 may output the generated alarm to the output unit 250.

When the alarm is output to the plurality of display units 251, the controller 170 may select a display unit for outputting the alarm from among the plurality of display units 251 based on the Rx data based on which the alarm is generated (hereinafter, referred to as 'alarm data').

For example, the controller 170 may determine a display unit through which the alarm is to be output, based on the transmission position of the alarm data.

For example, if determining that the transmission position of the alarm data is within a right side zone RSZ of the vehicle 100, the controller 170 may output the alarm to the window display 251h disposed in a passenger's seat direction or the side mirror display 251s on the right side mirror.

For example, if determining that the transmission position of the alarm data is within a left side zone LSZ of the vehicle 100, the controller 170 may output the alarm to the window display 251h disposed in a driver seat direction or the side mirror display 251s on the left side mirror.

For example, if determining that the transmission position of the alarm data is within a front zone FZ of the vehicle 100, the controller 170 may output the alarm to the windshield display 251c or the CID 251b.

For example, if determining that the transmission position of the alarm data is within a rear zone RZ of the vehicle 100, the controller 170 may output the alarm to the room mirror display 251r.

As is apparent from the foregoing description, embodiments of the present disclosure have one or more effects.

First, since Rx data is filtered according to an ambient situation or a vehicle state, the filtering of the unnecessary data may reduce a communication load.

Secondly, a data transmission zone is adjusted according to an ambient situation or a vehicle state. Therefore, the congestion of a communication channel may be reduced.

The present disclosure may be implemented as code that can be written on a computer-readable recording medium and thus read by a computer system. The computer-readable recording medium may be any type of recording device in which data is stored in a computer-readable manner. Examples of the computer-readable recording medium include a Hard Disk Drive (HDD), a Solid State Disk (SSD), a Silicon Disk Drive (SDD), a Read Only Memory (ROM), a Random Access Memory (RAM), a Compact Disk ROM (CD-ROM), a magnetic tape, a floppy disc, an optical data storage, and a carrier wave (e.g., data transmission over the Internet). The computer may include a processor a controller. The above embodiments are therefore to be construed in all aspects as illustrative and not restrictive. The scope of the present disclosure should be determined by the appended claims and their legal equivalents, not by the above description, and all changes coming within the meaning and equivalency range of the appended claims are intended to be embraced therein.

## Claims

1. A vehicle comprising:
a communication device for conducting Vehicle to Everything, V2X, communication with an external device outside the vehicle; and
a controller for configuring a reception zone based on acquired information, and if it is determined that a transmission position of data received through the communication device is outside the reception zone, filtering the received data.

2. The vehicle according to claim 1, wherein the information includes ambient situation information related to an ambient situation of the vehicle, and
wherein the controller determines a Region of Interest ,ROI, for the vehicle based on the ambient situation information, and sets the ROI as the reception zone.

3. The vehicle according to claim 2, wherein if it is determined based on the ambient situation information that the vehicle is driving on a 2-way road, the controller determines an area except for an opposite lane to the vehicle on the 2-way road to be the ROI, and/or wherein if it is determined based on the ambient situation information that the vehicle is to pass through an intersection, the controller determines an area within a predetermined distance from the intersection to be the ROI, and/or wherein if it is determined based on the ambient situation information that the vehicle is to pass through an area in which an accident has occurred, the controller determines the area in which the accident has occurred to be the ROI.

4. The vehicle according to claim 2, wherein the controller determines a traffic congestion degree of a road on which the vehicle is driving, based on the ambient situation information, and configures the reception zone in inverse proportion between the traffic congestion degree and a size of the reception zone.

5. The vehicle according to claim 2, wherein the information further includes navigation information provided by a navigation system of the vehicle, and
wherein the controller determines an area corresponding to a set path of the vehicle to be the ROI, further based on the navigation information.

6. The vehicle according to any one of claims 1 to 5, wherein the information includes vehicle state information representing an operation state of a device provided in the vehicle, and
wherein the controller configures the reception zone based on the vehicle state information.

7. The vehicle according to claim 6, wherein the controller determines a speed of the vehicle based on the vehicle state information, and configures the reception zone in proportion between the speed and a size of the reception zone, and/or wherein the controller determines a direction and size of a steering angle based on the vehicle state information, and configures the reception zone in correspondence with the direction and size of the steering angle, and/or wherein the controller determines an operation of a turn signal lamp based on the vehicle state information, and configures a lane corresponding to a direction of the turn signal lamp and a driving lane of the vehicle as the reception zone.

8. The vehicle according to claim 6, wherein the information includes information about the received data, and
wherein the controller determines a class of the received data based on the information about the received data, and configures a predetermined area for the class of the received data as the reception zone, the predetermined area for the class of the received data being a per-class reception zone.

9. The vehicle according to claim 8, wherein the information about the received data includes information about a type of the received data, and
wherein the controller determines the class of the received data according to the type of the received data, referring to a predetermined class table, and a size of the per-class reception zone is proportional to the class of the received data.

10. The vehicle according to claim 9, wherein the information about the received data further includes information about a size of the received data, and
wherein the controller determines the class of the received data according to the type and size of the received data, referring to a predetermined class table, and the class of the received data is inversely proportional to the size of the received data.

11. The vehicle according to claim 8, wherein the information further includes ambient situation information related to an ambient situation of the vehicle, and
wherein the controller determines an ROI for the vehicle based on the ambient situation information, and if it is determined that a transmission position of the received data is inside the ROI, not performing class-based filtering on the received data.

12. The vehicle according to any one of claims 1 to 11, wherein when transmission data is transmitted through the communication device, the controller configures a transmission zone based on the information, and adjusts transmission power of the communication device based on the transmission zone.

13. The vehicle according to claim 12, wherein the information includes information about the transmission data transmitted through the communication device, and
wherein the controller determines a class of the transmission data based on the information about the transmission data, and configures a predetermined area for the class of transmission data as the transmission zone, the predetermined area for the class of the transmitted data being a per-class transmission.

14. The vehicle according to claim 13, wherein the information about the transmission data includes information about a type of the transmission data, and
wherein the controller determines the class of the transmission data according to the type of the transmission data, referring to a predetermined class table, and a size of the per-class transmission zone is proportional to the class of the transmission data.

15. The vehicle according to claim 12, wherein the information includes information about a congestion degree of a channel used for communication, and wherein the controller determines a size of the transmission zone in inverse proportion to the congestion degree of the channel, based on the information about the congestion degree of the channel, and/or wherein the information includes ambient situation information and vehicle state information, and wherein the controller determines an ROI for the vehicle based on at least one of the ambient situation information and the vehicle state information, and configures the transmission region to include the ROI in the transmission region.
